# EUROPÄISCHE PATENTSCHRIFT

(11) **EP 3 892 074 B1**
(45) Veröffentlichungstag und Bekanntmachung des Hinweises auf die Patenterteilung: **10.04.2024**
(21) Anmeldenummer: 21155115.5
(22) Anmeldetag: 04.02.2021
(51) Int. Cl.: A01B 23/02, A01B 33/10

(54) **LANDWIRTSCHAFTLICHES BODENBEARBEITUNGSWERKZEUG, INSBESONDERE KREISELEGGEN-ZINKEN ODER STRIEGELZINKEN**
AGRICULTURAL SOIL WORKING TOOL, IN PARTICULAR ROTARY HARROW FORKS OR HARROW TINES
OUTIL AGRICOLE DE TRAITEMENT DU SOL, EN PARTICULIER DENT DE HERSE ROTATIVE OU DENT DE RACLAGE

(30) Priorität: 07.04.2020 DE 102020109713
(43) Veröffentlichungstag der Anmeldung: 13.10.2021
(60) Teilanmeldung: 24152544.3
(73) Patentinhaber: Betek GmbH & Co. KG, 78733 Aichhalden (DE)
(72) Erfinder: RUGGABER, Stefan, 78797 Fluorn-Winzeln (DE); LENSKI, Matthias, 78713 Schramberg-Sulgen (DE); SEIFRIED, Fabian, 78662 Herrenzimmern (DE)
(74) Vertreter: Herrmann, Jochen

(56) Entgegenhaltungen:
- DE-A1-102011 053 098
- DE-U1-202009 019 047
- DE-U1-202016 002 876
- FR-A1- 2 527 894
- JP-A- 2008 081 986
- US-B1- 6 425 446

## Beschreibung

Die Erfindung betrifft ein Bodenbearbeitungswerkzeug, insbesondere einen Kreiseleggen-Zinken oder einen Striegelzinken, für eine landwirtschaftliche Bodenbearbeitungsmaschine mit einem Zinkenkörper, der einen Befestigungsabschnitt zur maschinenseitigen Befestigung und einen Arbeitsabschnitt aufweist, wobei der Arbeitsabschnitt an seinem dem Befestigungsabschnitt abgewandten freien Ende eine Endfläche und an dem an die Endfläche angrenzenden Arbeitsabschnitt frontseitig eine Anlagefläche aufweist, wobei an der Anlagefläche des Arbeitsabschnitts wenigstens ein Schneidelement, bestehend aus Hartstoff, insbesondere Hartmetall oder Keramikmaterial, befestigt ist.

Landwirtschaftliche Bodenbearbeitungswerkzeuge sind in vielfältiger Weise aus dem Stand der Technik bekannt. Beispielsweise dienen Striegelzinken in der landwirtschaftlichen Bodenbearbeitung zur mechanischen Unkrautbekämpfung. Ein Traktor zieht Bodenbearbeitungsgeräte, beispielsweise einen Hackstriegel über den Acker. Die nach unten zeigenden Striegelzinken greifen in den Boden ein und reißen dabei Unkrautpflanzen aus der oberen Bodenschicht aus. Mit dieser Art der mechanischen Unkrautbekämpfung werden chemische Unkrautvernichtungsmittel vermieden.

EP 3 560 310 A1 offenbart einen Striegelzinken, dessen Zinkenkörper aus einem gebogenen Draht besteht. In Arbeitsrichtung vorne wird auf die Vorderseite des Zinkenkörpers ein Hartmetallkörper aufgesetzt, der ein Schneidelement bildet. Problematisch bei diesem Striegelzinken ist die mechanische Festigkeit. Während des Betriebseinsatzes kann sich die freie Stirnseite des Zinkenkörpers durch den abrasiven Angriff des Bodenmaterials abnutzen. Dann ist der Hartmetallkörper nicht mehr ausreichend sicher gehalten und kann brechen. In diesem Fall entsteht ein Werkzeugausfall noch vor Ablauf der maximalen Standzeit des Hartmetallkörpers.

DE 10 2016 114 447 B7 schlägt vor, in den Zinkenkörper eines Striegelzinkens endseitig einen Schlitz einzubringen. In diesen Schlitz kann ein Hartmetallelement eingelötet werden. Der Hartmetallkörper schließt mit der stirnseitigen Endfläche des Zinkenkörpers bündig ab. Dementsprechend liegt die freie Stirnseite des Hartmetallkörpers in einer Ebene mit der Endfläche. Es hat sich gezeigt, dass diese Anordnung eine gegenüber der EP 3 560 310 A1 verbesserte Standzeit aufweist, da insbesondere ein besserer Schutz des freien Endes des Zinkenkörpers durch das Hartmetallelement bewirkt ist. Beim Einsatz in einem stark abrasiven Bodenmaterial waschen allerdings die beiden seitlich an den Hartmetallkörper anschließenden Bereiche der Endfläche des Zinkenkörpers derart stark aus, dass der Hartmetallkörper seitlich nicht mehr in diesem Bereich fixiert ist. Bei auftretenden Querkräften, beispielsweise bei Auftreffen eines gröberen Steins, bricht das Hartmetallelement.

Aus der EP 3 244 717 und der DE 10 2011 051 751 A1 sind Kreiseleggenzinken bekannt. DE 20 2016 002876 U1 offenbart eine Bodenbearbeitungsmaschine, deren Werkzeug einen Trägerabschnitt mit einem freien Ende umfasst, das eine Schneidbereich mit einer Schneidkante bildet, wobei ein Teil des Schneidbereiches durch ein Schneidelement aus Hartstoffmaterial gebildet ist.

Aufgabe der Erfindung ist es, ein Bodenbearbeitungswerkzeug der eingangs erwähnten Art bereitzustellen, welches sich durch eine verbesserte Standzeit auszeichnet.

Diese Aufgabe wird dadurch gelöst, dass das Schneidelement mit einen Schenkel vorderseitig an der Anlagefläche stoffschlüssig befestigt ist, dass an den Schenkel einteilig ein Ansatz angeformt ist, der die Endfläche des Zinkenkörpers zumindest bereichsweise übergreift, dass der Ansatz stoffschlüssig mit der Endfläche verbunden ist, und dass zwischen dem Schenkel und dem Ansatz ein Übergangsbereich gebildet ist, der den Übergang zwischen der Anlagefläche und der Endfläche zumindest bereichsweise überdeckt.

Erfindungsgemäß weist das Schneidelement einen Schenkel und einen einteilig daran angeformten Ansatz auf. Der Ansatz dient dazu, das freie Ende des Zinkenkörpers zu übergreifen. Damit wird die Endfläche des Zinkenkörpers flächig vor Verschleißangriff geschützt. Dabei bewirkt der Ansatz nicht nur alleine ein Übergreifen der Endfläche. Vielmehr steht der Ansatz auch in Richtung der Längserstreckung des Schneidelements über die Endfläche des Zinkenkörpers vor. Hierdurch wird die axiale Länge des Bodenbearbeitungswerkzeuges verlängert und zwar mit dem verschleißfesten Material des Schneidelements. In dem Endbereich, der nun von dem Ansatz gebildet ist, entsteht der größte Verschleißdruck. Der Endbereich des Bodenbearbeitungswerkzeuges kann mit anderen Worten nun bevorzugt von dem verschleißfesten Ansatz gebildet werden. Dieses Bauteil nimmt den höchsten Verschleißdruck zuverlässig auf. In Richtung der Längsachse des Schneidelements baut sich der Verschleißdruck relativ schnell ab. Dieser Verschleißdruck wird dann von dem Schenkel des Schneidelements abgefangen. Auf diese Weise ergibt sich eine verschleißoptimierte Geometrie für das Bodenbearbeitungswerkzeug zugunsten einer deutlich verlängerten Standzeit. Insbesondere wird mit dem Ansatz der Längenverschleiß des Zinkenkörpers erheblich reduziert.

Erfindungsgemäß kann es auch vorgesehen sein, dass der Ansatz stoffschlüssig mit der Endfläche verbunden ist. Hierdurch wird die Bruchgefahr des Schneidelements deutlich verringert. Insbesondere können schlagartige Beanspruchungen, beispielsweise bei Auftreffen eines Steins, in den Ansatz eingebracht werden. Diese Beanspruchungen werden dann über den Ansatz in die stoffschlüssige Verbindung und anschließend in den Zinkenkörper zuverlässig abgeleitet.

Das Schneidelement deckt zumindest einen Teil der Endfläche und weiterhin den Übergangsbereich zwischen der Anlagefläche und der Endfläche ab. Hierdurch wird ein Auswaschen des Zinkenkörpers zuverlässig verhindert.

Erfindungsgemäß ist die Anlagefläche des Arbeitsabschnitts des Zinkenkörpers konvex ausgebildet, und das Schneidelement weist an seinem Schenkel eine eingetiefte Aufnahme auf die sich in Richtung der Längsachse des Schneidelements erstreckt und in die die konvexe Anlagefläche zumindest bereichsweise hineinragt. Auf diese Weise können kompakte bauende Bodenbearbeitungswerkzeuge geschaffen werden.

Vorzugsweise kann es so sein, dass der Zinkenkörper aus einem Profilabschnitt, beispielsweise einem Drahtabschnitt gebildet ist. Dieser kann an seiner Oberfläche, welche dem Schenkel des Schneidelements zugekehrt ist, mechanisch unbearbeitet bleiben. Der konvexe Bereich dieses Drahtabschnitts wird in der Aufnahme des Schneidelements aufgenommen. Hierdurch ergibt sich eine vereinfachte Fertigung. Entsprechend kann es vorgesehen sein, dass der Arbeitsabschnitt des Zinkenkörpers von einem Drahtabschnitt gebildet ist, der vorzugsweise einteilig in den Befestigungsabschnitt mittelbar oder unmittelbar übergeht.

Eine bevorzugte Erfindungsvariante ist dergestalt, dass der Schenkel des Schneidelements wenigstens zwei Anlageabschnitte aufweist, die vorzugsweise innerhalb der eingetieften Aufnahme angeordnet sind und die weiter vorzugsweise dazu ausgebildet sind, unterschiedliche Querschnitte von Arbeitsabschnitten, insbesondere kreisförmige Querschnitte aufzunehmen. Auf diese Weise kann ein Schneidelement bausatzartig mit unterschiedlichen Zinkenkörpern verbunden werden. Wenn die Anlageabschnitte innerhalb der eingetieften Aufnahme angeordnet sind, so lässt sich auch bei den unterschiedlichen Bauvarianten eine kompakte Bauweise einhalten. Die Anlageabschnitte können vorzugsweise dann auch eingesetzt werden, um zwischen der Außenkontur des Zinkenkörpers und der durch die Aufnahme gebildeten Innenkontur zumindest bereichsweise eine definierte Spaltenbreite zu verwirklichen. Diese Spaltenbreite ist dann geeignet um eine stoffschlüssige Verbindung, insbesondere eine Lotverbindung oder Klebeverbindung, mit hoher Verbindungkraft zu verwirklichen.

Erfindungsgemäß kann es vorgesehen sein, dass in der Aufnahme oder in einem Bereich außerhalb der Aufnahme zwei zueinander beabstandete erste Anlageabschnitte angeordnet sind, die auf einem ersten Teilkreis angeordnet sind, und dass in der Aufnahme oder in einem Bereich außerhalb der Aufnahme zwei zueinander beabstandete zweite Anlageabschnitte angeordnet sind, die auf einem zweiten Teilkreis angeordnet sind, wobei diese beiden Teilkreise einen unterschiedlichen Durchmesser aufweisen. Auf diese Weise lassen sich mit einem Schneidelement bausatzartig zwei Zinkenkörper unterschiedlichen Querschnitts verbinden. Der erste Zinkenkörper ist dann an den ersten Anlageabschnitten abgestützt. Wird der zweite Zinkenkörper mit dem Schneidelement verbunden, so stützt er sich auf den zweiten Anlageabschnitten ab. Diese Bauweise eignet sich insbesondere für Zinkenkörper, die einen kreisrunden Querschnitt haben, beispielsweise aus einem Drahtabschnitt gebildet sind.

Für eine sichere Festlegung des Schneidelements an dem Arbeitsabschnitt des Zinkenkörpers kann es vorgesehen sein, dass die Aufnahme eine Ausnehmung aufweist, an die sich beidseitig die zweiten Anlageabschnitte anschließen, dass zwischen den ersten und den zweiten Anlageabschnitten jeweils eine Mulde ausgebildet ist, und dass die Ausnehmung und die Mulden mit Stoffschlussmaterial, insbesondere mit Lotmaterial oder einem Klebematerial zumindest teilweise gefüllt sind.

Wenn vorgesehen ist, dass die ersten und zweiten Anlageabschnitte als konvexe Erhebungen ausgebildet sind, die sich als rippenförmige Erhebungen in der Aufnahme in Richtung der Längsachse des Schneidelements erstrecken, dann kann das Schneidelement sicher an dem Arbeitsabschnitt des Zinkenkörpers positioniert werden. Zudem ist das Schneidelement festigkeitsoptimiert ausgebildet. Über die konvexen Erhebungen werden Stetigkeitssprünge im Schneidelement vermieden.

Für das Schneidelement ergibt sich im Bereich des Ansatzes dann eine stabile Geometrie, wenn vorgesehen ist, dass der Schenkel des Schneidelements eine Schneidekante oder eine Schneidfläche aufweist, die sich in Richtung der Längsachse des Schneidelements erstreckt, dass an dem Ansatz eine Stirnfläche vorgesehen ist, die im Winkel zu der Endfläche zur Bildung einer Freifläche oder parallel zu dieser steht, und dass zwischen der Stirnfläche und die Schneidkante oder Schneidfläche ein Übergangsabschnitt geformt ist. Vorzugsweise kann der Übergangsabschnitt eine Schneide bilden. Eine solche Konstruktion eignet sich in besonderer Weise für eine zuverlässige mechanische Unkrautbekämpfung. Die Schneidfreudigkeit der Schneide wird durch das verwendete Hartstoffmaterial über die gesamte Einsatzdauer des Werkzeugs zuverlässig aufrechterhalten. Die Schneide kann insbesondere scharfkantig oder verrundet ausgebildet sein.

Eine denkbare Erfindungsvariante ist derart, dass der Ansatz eine rückwärtige Freifläche aufweist, die mit der Längsachse des Schneidelements einen spitzen Winkel einschließt und entgegengesetzt zu der frontseitigen Schneidfläche oder Schneidkante des Schenkels steht. Während des Bearbeitungseinsatzes wird der Zinkenkörper abhängig von den anstehenden Bearbeitungskräften mehr oder weniger stark abgebogen. Durch die Verwendung der im spitzen Winkel angestellten Freifläche wird der rückwärtige Bereich des Ansatzes so freigestellt, dass er in den verschiedenen Betriebsstellungen nicht oder nur wenig mit dem geschnittenen Bodenhorizont in Berührung kommt. Hierdurch werden die erforderlichen Zugkräfte reduziert. Insbesondere kann der spitze Winkel im Bereich zwischen 15° und 90° betragen.

Für die Montage gelingt eine zuverlässige Positionierung des Schneidelements am Zinkenkörper auf einfache Weise dann, wenn vorgesehen ist, dass der Ansatz einen Anschlag aufweist, der an der Endfläche des Zinkenkörpers anschlägt.

Eine weitere Erfindungsvariante kann dergestalt sein, dass der Ansatz eine Befestigungsfläche aufweist, und dass zwischen der Befestigungsfläche und der Endfläche des Zinkenkörpers eine Stoffschlussverbindung, insbesondere ein Lotmaterial oder eine Klebeverbindung, angeordnet ist. Für die Ausbildung einer festen stoffschlüssigen Verbindung, insbesondere einer Lotverbindung ist es vorteilhaft, wenn in gewissen Grenzen eine zulässige Spaltenbreite zwischen den Verbindungspartnern nicht überschritten wird. Für die Ausbildung der Zinkenkörper werden üblicherweise Profilabschnitte, die von Endlosprofilen abgelängt sind (beispielsweise Drahtprofile), verwendet. Die Verwendung anderer Zinkenkörper, beispielsweise geschmiedete Zinkenkörper, ist ebenfalls denkbar. Bei solchen Zinkenkörpern sind die Endflächen mechanisch nicht bearbeitet. Insofern würde der Ansatz des Schneidelements auf einer solchen Endfläche nicht reproduzierbar eben aufliegen. Die Folge hiervon ist eine gesteigerte Bruchgefahr für das Schneidelement, da die Bearbeitungskräfte nicht ausreichend zuverlässig in die Endfläche abgeleitet werden können. Wenn nun, wie vorstehend vorgeschlagen, zwischen dem Ansatz und der Endfläche eine stoffschlüssige Verbindung vorgesehen ist, so werden Fertigungsungenauigkeiten ausgeglichen und dabei eine flächige Abstützung des Ansatzes gegenüber der Endfläche dennoch über die stoffschlüssige Verbindung garantiert. Dies vereinfacht die Fertigung. Insbesondere muss die Endfläche des Zinkenkörpers nicht aufwendig mechanisch nachbearbeitet werden.

Erfindungsgemäß kann es vorgesehen sein, dass der zwischen dem Schenkel und dem Ansatz gebildete Übergangsbereich des Schneidelements beabstandet zu dem Kantenbereich des Zinkenkörpers, der den Übergang zwischen der Anlagefläche und der Endfläche bildet, angeordnet ist. In diesem Übergangsbereich des Zinkenkörpers kann insbesondere ein Grat gebildet sein. Dieser behindert die ordnungsgemäße Anlage des Schneidelements am Arbeitsabschnitt des Zinkenkörpers. Dadurch dass nun der Kantenbereich des Zinkenkörpers beabstandet zu dem Übergangsbereich angeordnet ist, findet ein solcher Grat Platz, ohne dass er die bestimmungsgemäße Anlage des Schneidelements am Arbeitsabschnitt behindert. Hierdurch wird die Fertigung erheblich vereinfacht und verbessert. Vorzugsweise kann der Übergangsbereich von einer Nut gebildet sein oder dieser Übergangsbereich eine Nut aufweisen. Ein solcher Übergangsbereich kann einfach in das aus Hartmetall bestehende Schneidelement integriert, beispielsweise eingesintert sein. Im einfachsten Fall kann eine solche Nut auch von zwei im Winkel zueinander angestellten Flächen gebildet sein, die den Übergangsbereich formen. Gegebenenfalls sind diese beiden im Winkel zueinander angestellten Flächen spannungsoptimiert über einen Übergangsabschnitt, beispielsweise eine Verrundung, ineinander übergeleitet.

Eine bruchstabile Ausbildung des Schneidelementes lässt sich insbesondere dadurch erreichen, dass der Ansatz in Richtung der Längsachse des Schneidelements zumindest 1 mm und maximal 20 mm über die Endfläche des Zinkenkörpers vorsteht.

Zu diesem Zweck kann es auch für die in dieser Schrift beschriebenen Anwendungen vorgesehen sein, dass die Erstreckung des Schneidelements in Richtung der Längsachse des Schneidelements im Bereich zwischen20 mm und 100 mm beträgt und/oder die Erstreckung des Schneidelements senkrecht zu der Längsachse des Schneidelements im Bereich zwischen 5 mm und 30 mm beträgt.

Erfindungsgemäß kann es auch vorgesehen sein, dass der Schenkel des Schneidelements eine frontseitige, in Richtung der Längsachse des Schneidelements verlaufende Schneidfläche aufweist, dass vorzugsweise an die Schneidfläche beidseitig im Winkel Ableitflächen angeschlossen sind, die ebenfalls in Richtung der Längsachse des Schneidelements verlaufen und dass die Schneidfläche und/oder die Ableitflächen über eine Fase in Richtung zu dem dem Ansatz abgewandten Ende hin auslaufen derart, dass sich die Materialdicke des Schenkels in diesem Bereich verringert. Auf diese Weise lässt sich zum einen der Materialverbrauch für das teure Material des Schneidelementes optimieren. Zum anderen verbessert sich durch diese Maßnahme auch die Ableitung des entfernten Unkrauts. Zu diesem Zweck empfiehlt es sich die Erstreckung der Fase in Richtung der Längsachse des Schneidelements >10 % der Länge des Schneidelements diese Richtung zu wählen.

Eine mögliche Erfindungsvariante ist derart, dass der Schenkel an seinem, den Ansatz tragenden und über die Endfläche des Zinkenkörpers vorstehenden Endabschnitt, zumindest bereichsweise eine sich in Breitenrichtung verlaufende Breite aufweist, die gleich oder größer ist als die Breite des Arbeitsabschnitts des Zinkenkörpers in diese Richtung. Eine solche Bauart, bei der insbesondere die Breite des Endabschnitts größer ist als die Breite des Arbeitsabschnitts des Zinkenkörpers, eignet sich insbesondere für eine verbesserte Produktion von Feinerde. Weiterhin können solche Werkzeuge zur biologischen Unkrautbekämpfung eingesetzt werden.

Der in das Erdreich eingreifende verbreiterte Endabschnitt schneidet die Wurzeln der Unkräuter ab und dient gleichzeitig der Verschüttung dieser Unkräuter.

Alternativ kann es auch vorgesehen sein, dass der Schenkel an seinem, den Ansatz tragenden und über die Endfläche des Zinkenkörpers vorstehenden Endabschnitt, zumindest bereichsweise eine sich in Breitenrichtung verlaufende Breite aufweist, die kleiner ist als die Breite des Arbeitsabschnitts des Zinkenkörpers in diese Richtung. Ein solches Werkzeug eignet sich insbesondere dazu, tief in den zu bearbeitenden einzudringen und diesen zu lockern. Die Bodenkruste wird aufgebrochen, sodass eine bessere Bodenbelüftung und Nährstoffanregung möglich wird. Auch lassen sich solche Werkzeuge für die Entfernung von Beikräutern ideal einsetzen.

Ein erfindungsgemäßes landwirtschaftliches Bodenbearbeitungswerkzeug kann auch dadurch gekennzeichnet sein, dass der Schenkel an seinem, an die Anlagefläche anschließenden und nicht über die Endfläche des Zinkenkörpers vorstehenden Bereich, zumindest bereichsweise eine sich in Breitenrichtung verlaufende Breite aufweist, die gleich oder größer ist als die Breite des Arbeitsabschnitts des Zinkenkörpers in diese Richtung. Mit dieser Maßnahme wird eine vergrößerte Bodenbewegung erreicht. Dies ist insbesondere bei der Produktion von Feinerde von Bedeutung. Darüber hinaus wird auf diese Weise ein breitflächiger Schnitt der Unkräuter bewirkt. Weiterhin lässt sich mit solchen Bodenbearbeitungswerkzeugen eine flache Bodenbearbeitung realisieren. Es hat sich darüber hinaus gezeigt, dass mit einer solchen Gestaltung ein Überschnitt verwirklicht werden kann. Dies ist besonders bei weitem Strichabstand und bei Arbeiten am Hang von Vorteil.

Alternativ kann es auch vorgesehen sein, dass der Schenkel an seinem, an die Anlagefläche anschließenden und nicht über die Endfläche des Zinkenkörpers vorstehenden Bereich, zumindest bereichsweise eine sich in Breitenrichtung verlaufende Breite aufweist, die kleiner ist als die Breite des Arbeitsabschnitts des Zinkenkörpers in diese Richtung. Bei einer solchen Werkzeuggestaltung wird eine geringere Bodenbewegung bewirkt. Dies ist bei der Bearbeitung von Unkräutern wie Ackerfuchsschwanz von Bedeutung. Zudem wird eine gute Bodenpenetration durch die geringe Aufstandsfläche bewirkt. Insgesamt lassen sich eine tiefere Bearbeitung und ein partieller Schnitt über die gesamte Arbeitsbreite erreichen. Dies ist insbesondere zum Schutz gegen Bodenerosion von Bedeutung.

Eine denkbare Erfindungsvariante ist dergestalt, dass der Schenkel an seinem, den Ansatz tragenden und über die Endfläche des Zinkenkörpers vorstehenden Endabschnitt, zumindest bereichsweise eine schaufel- oder spatenförmige Geometrie in Aufsicht auf die Vorderseite aufweist. Solche Werkzeugvarianten zeichnen sich durch eine verbesserte Schneidfreudigkeit aus. Sie dienen insbesondere auch zur besseren Produktion eines Feinerde-Anteils.

Im Rahmen der Erfindung kann es auch vorgesehen sein, dass der Schenkel an seinem, den Ansatz tragenden und über die Endfläche des Zinkenkörpers vorstehenden Endabschnitt, zumindest bereichsweise eine Schneide bildet, die in Aufsicht auf die Vorderseite eine gerundete, eine wellenförmige, geradlinige und/oder zackenförmige Kontur bildet.

Die Erfindung wird im Folgenden anhand von in den Zeichnungen dargestellten Ausführungsbeispielen näher erläutert. Es zeigen:
Figur 1 in perspektivischer Ansicht einen Abschnitt eines Striegelzinkens,
Figuren 2 bis 5 verschiedene Ansichten eines Schneidelements, welches an dem Striegelzinken gemäß Figur 1 verbaut ist,
Figur 6 den Striegelzinken gemäß Figur 1 und längs des in Figur 7 mit VI-VI markierten Schnittverlaufs,
Figur 7 den Striegelzinken entlang des in Figur 6 mit VII-VII markierten Schnittverlaufs,
Figuren 8 und 9 in perspektivischer Darstellung weitere Details des Schneidelements, wobei Figur 9 ein in Figur 8 mit IX markiertes Detail wiedergibt,
Figur 10 den Striegelzinken gemäß Figur 1 in Ansicht von links,
Figur 11 ein der Figur 6 entnommenes vergrößertes Detail,
Figur 12 die Darstellung gemäß Figur 10 mit einem markierten Schnittverlauf,
Figur 13 einen Schnitt längs des in Figur 12 mit XIII-XIII markierten Schnittverlaufs,
Figur 14 ein der Figur 13 entnommenes und dort mit XIV markiertes Detail in vergrößerter Darstellung,
Figur 15 eine perspektivische Ansicht einer weiteren Ausgestaltungsvariante eines Striegelzinkens und
Figuren 16 und 17 ein Schneidelement des Striegelzinkens gemäß Figur 15 in verschiedenen Ansichten,
Figuren 18 bis 21 verschiedene Varianten von Striegelzinken im Querschnitt,
Figuren 22 und 23 im Längsschnitt zwei Varianten eines Zinkenkörpers für einen Striegelzinken,
Figuren 24 und 25 zwei Varianten eines Schneidelements für einen Striegelzinken im Längsschnitt,
Figuren 26a bis 26c eine Variante eines Schneidelements, insbesondere für einen Striegelzinken, wobei das Schneidelement eine spatenförmige Geometrie in Aufsicht aufweist,
Figuren 27a bis 27c eine Variante eines Schneidelements, insbesondere für einen Striegelzinken, wobei das Schneidelement eine schaufelförmige Geometrie in Aufsicht aufweist,
Figuren 28a und 28b eine Variante eines Schneidelements, insbesondere für einen Striegelzinken, wobei das Schneidelement in Aufsicht eine sich verjüngende Geometrie aufweist,
Figuren 29a bis 29d eine Variante eines Schneidelements, insbesondere für einen Striegelzinken, wobei das Schneidelement eine spatenförmige Geometrie in Aufsicht aufweist,
Figuren 30 bis 38 verschiedene Varianten eines Schneidelements, insbesondere für einen Striegelzinken, in Aufsicht auf die Vorderseite eines Schneidelements, wobei die dargestellten Schneidelemente unterschiedliche Schneidengeometrien aufweisen.

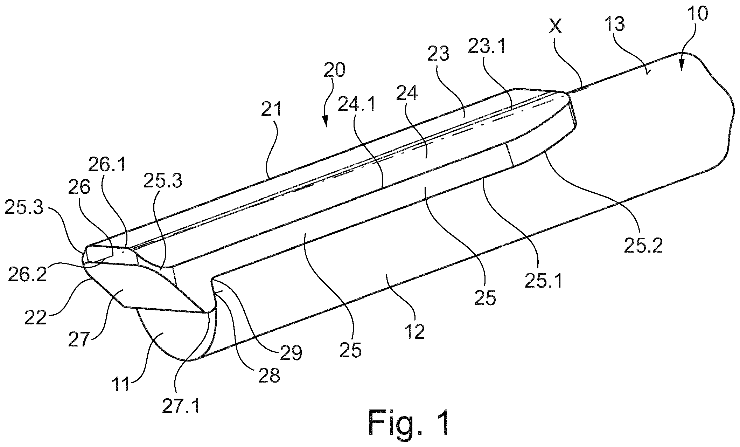

Figur 1 zeigt die Erfindung beispielhaft anhand eines Striegelzinkens. Dabei ist die Erfindung nicht auf einen Striegelzinken beschränkt. Vielmehr gelten die nachfolgenden Ausführungen auch für andere landwirtschaftliche Bodenbearbeitungswerkzeuge, insbesondere auch für Kreiseleggenzinken.

Der Striegelzinken weist einen Zinkenkörper 10 auf. Der Zinkenkörper 10 ist in Figur 1 nur abschnittsweise dargestellt, nämlich dessen Endbereich, der dazu dient während des Bearbeitungsvorgangs in den Boden einzudringen. Der Zinkenkörper 10 weist dementsprechend im Anschluss an den in Figur 1 gezeigten Arbeitsabschnitt 12 einen weiteren Bereich auf, der mit einem maschinenseitigen Befestigungsabschnitt endet. Dieser weitere Bereich und der Befestigungsabschnitt können einteilig mit dem Arbeitsabschnitt 12 verbunden sein. Denkbar ist es jedoch auch, dass verschiedene Bauteile zur Bildung des Zinkenkörpers 10 zusammengefügt sind.

Bei einer gängigen Bauweise für den Zinkenkörper 10 ist zumindest der Bereich des Arbeitsabschnitts 12 von einem Federstahl gebildet. Im Rahmen der Erfindung ist nicht nur die Verwendung eines solchen Federstahls denkbar.

Bevorzugt besteht der Zinkenkörper 10 zumindest im Bereich seines Arbeitsabschnitts 12 aus einem Profilabschnitt. Im vorliegenden Ausführungsbeispiel ist der Arbeitsabschnitt 12 von einem Draht mit kreisrundem Querschnitt gebildet. Andere Querschnittsformen, beispielsweise ovale Querschnittsformen oder kantige Querschnittsformen, beispielsweise 4-kant-, Mehrkant- oder Polygon-Querschnittsformen sind denkbar.

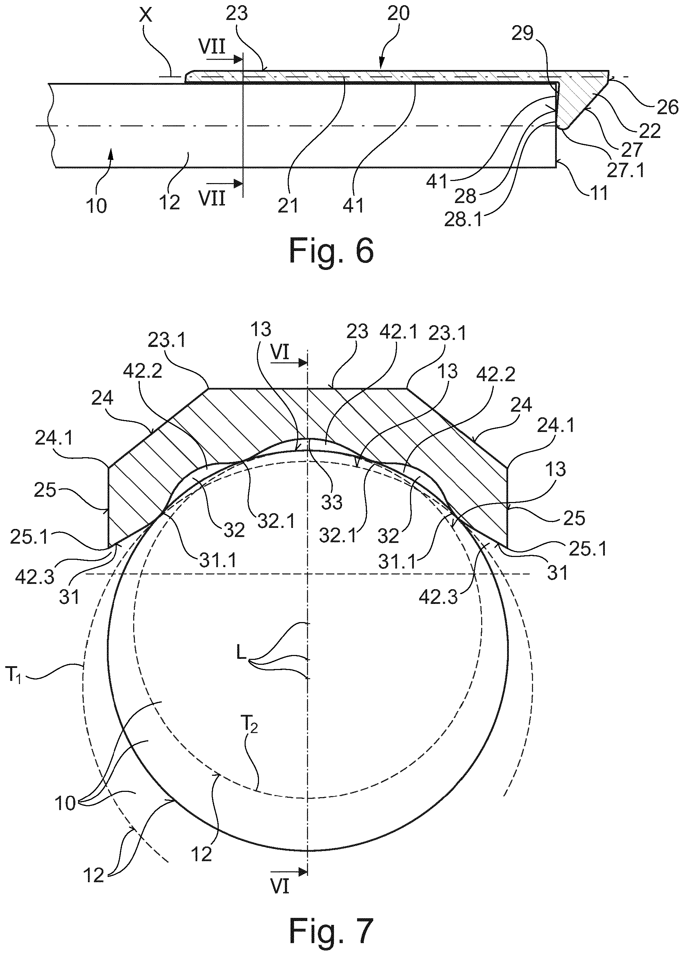

Der Arbeitsabschnitt 12 weist an seinem freien Ende eine Endfläche 11 auf. Diese Endfläche 11 steht vorzugsweise im Wesentlichen senkrecht zu der Längsachse L (siehe Figur 7) des Arbeitsabschnitts 12. Mit seinem Außenumfang bildet der Arbeitsabschnitt 12 eine Anlagefläche 13. An der Vorderseite des Arbeitsabschnitts 12 kann ein Schneidelement 20 befestigt werden.

Das Schneidelement 20 weist einen Schenkel 21 auf, an den einteilig ein Ansatz 22 angeformt ist. Das Schneidelement 20 besteht aus Hartmetall und weist vorzugsweise eine Härte von 900 HV bis 1400 HV auf.

Der Schenkel 21 erstreckt sich in Richtung der Längsachse X des Schneidelements 20. In Richtung dieser Längsachse X ist der Schenkel 21 um ein Mehrfaches länger als die Erstreckung des Ansatzes 22 in diese Richtung. Vorzugsweise ist die Erstreckung des Schenkels 21 in Richtung der Längsachse X mindestens 5-mal so lang wie die Erstreckung des Ansatzes 22 in dieser Richtung.

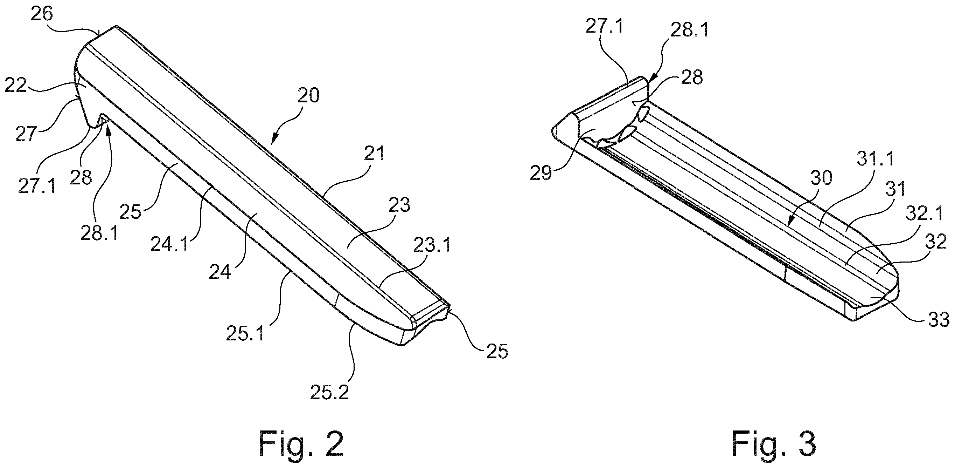

Den Figuren 2 bis 5 kann die Gestaltung des Schneidelements 20 im Detail entnommen werden. Wie diese Darstellungen zeigen, weist das Schneidelement 20 an seiner Vorderseite eine Schneidfläche 23 auf. Die Schneidfläche 23 verläuft in Richtung der Längsachse des Schneidelements 20.

An die Schneidfläche 23 schließen sich beidseitig Ableitflächen 24 an. Zu diesem Zweck sind Übergangsabschnitte 23.1 vorgesehen, die die Schneidfläche 23 in die Ableitflächen 24 überleiten. Die beiden Übergangsabschnitte 23.1 verlaufen in Richtung der Längsachse des Schneidelements 20. Dementsprechend verlaufen auch die Ableitflächen 24 in Richtung der Längsachse des Schneidelements 20.

An die Ableitflächen 24 schließen sich Seitenflächen 25 an. Die Seitenflächen 25 sind jeweils in die zugeordnete Ableitfläche 24 mittels eines Anschlussbereichs 24.1 übergeleitet.

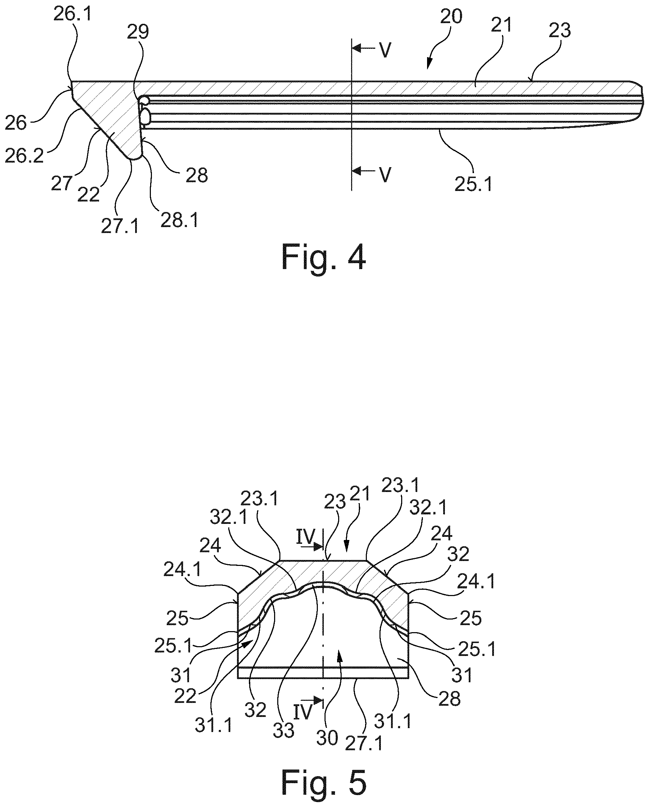

Wie Figur 5 erkennen lässt, sind sowohl die Übergangsabschnitte 23.1 als auch die Anschlussbereiche 24.1 als scharfkantige Übergänge gestaltet. Denkbar ist es jedoch auch, dass hier Rundungsübergänge vorgesehen sind.

Die Seitenflächen 25 verlaufen vorzugsweise in Richtung der Vorschubrichtung, also von der Vorderseite des Schneidelements 20, welche von der Schneidfläche 23 gebildet ist, zu der Rückseite des Schneidelements 20, welche der Vorderseite gegenüberliegt.

Die Seitenflächen 25 schließen mit einem Rand 25.1 ab. Der Rand 25.1 verläuft über einen Großteil seiner Längserstreckung geradlinig. An dem dem Ansatz 22 abgewandten Ende des Schneidelements 20 verlaufen die beiden Ränder 25.1 unter Bildung von Überleitbereichen 25.2 aufeinander zu. Entsprechend werden auch die Ableitflächen 24 vorzugsweise kontinuierlich in Richtung auf das freie Ende des Schneidelements 20 hin verjüngt (siehe Figur 2). Auf diese Weise ergibt sich eine material- und verschleißoptimierte Bauweise.

Figur 3 zeigt, dass das Schneidelement 20 rückseitig eine eingetiefte Aufnahme 30 aufweist. Die Gestaltung dieser Aufnahme 30 lässt sich näher den Figuren 4 und 5 entnehmen. Wie diese Darstellungen zeigen, besitzt die Aufnahme 30 zwei zweite Anlageabschnitte 32.1. Diese Anlageabschnitte 32.1 können als konvexe Erhebungen ausgebildet sein, die in Richtung der Längsachse X des Schneidelements 20 verlaufen. Die beiden zweiten Anlageabschnitte 32.1 begrenzen eine Ausnehmung 33, die vorzugsweise konkav ausgebildet ist.

Gegenüberliegend der Ausnehmung 33 schließen sich an die beiden ersten Anlageabschnitte 31.1 Mulden 32 an. Diese Mulden 32 verlaufen ebenfalls in Richtung der Längsachse X des Schneidelements 20. Die Mulden 32 können konkav ausgebildet sein, wie Figur 5 zeigt.

Wie Figur 5 zeigt, können sich an die beiden Mulden 32 die zweiten Anlageabschnitte 32.1 anschließen. Zwischen den ersten Anlageabschnitten 31.1 und den zweiten Anlageabschnitten 32.1 sind entsprechend die Mulden 32 geformt. Die zweiten Anlageabschnitte 32.1 können ebenfalls als konvexe Erhebungen innerhalb der Aufnahme 30 vorgesehen sein.

Im Anschluss an die ersten Anlageabschnitte 31.1 läuft die Aufnahme 30 in Flanken 31 aus. Bevorzugt sind die Flanken 31 als ebene Flächen ausgebildet. Sie können jedoch auch als konvex oder konkav gebogenen Flächen ausgebildet sein. Die Flanken 31 werden über die Ränder 25.1 in die Seitenflächen 25 übergeleitet.

Gemäß einer Erfindungsvariante müssen sich die Anlageabschnitte 31.1 und/oder 32.1 nicht über die gesamte Länge der Aufnahme 30 erstrecken. Vielmehr können sie auch nur über einen Teilbereich der Aufnahme 30 ausgebildet sein. Denkbar ist es auch, dass keine durchgehenden rippenförmigen Anlageabschnitte 31.1, 32.1 sondern beispielsweise unterbrochene Geometrien, noppenförmige Erhebungen oder dergleichen vorgesehen sind.

Figur 7 lässt erkennen, dass die beiden ersten Anlageabschnitte 31.1 Bereiche aufweisen, die auf einem ersten Teilkreis T1 angeordnet sind. Die zweiten Anlageabschnitte 32.1 weisen Bereiche auf, die auf einem zweiten Teilkreis T2 angeordnet sind. Dabei ist der Durchmesser des zweiten Teilkreis T2 kleiner als der Durchmesser des ersten Teilkreis T1.

Entsprechend dem Durchmesser der beiden Teilkreise T1 und T2 können wahlweise Zinkenkörper 10 mit Arbeitsabschnitten 12 mit dem Schneidelement 20 verbaut werden, wobei beispielsweise kreisrunde Querschnitte zum Einsatz kommen, deren Durchmesser dem Durchmesser der beiden Teilkreise T1 oder T2 entsprechen.

Aufgrund der konvexen Ausbildung der Anlageabschnitte 31.1 und 32.1 ist der Anwender nicht auf die Wahl der hier konkret geschriebenen Durchmesser der Teilkreise T1 und T2 beschränkt. Vielmehr bilden die verwendeten konvexen Geometrie der Anlageabschnitte 31.1 und 32.1 weitere Anlagebereiche, die wieder auf einem gemeinsamen Teilkreis liegen. Entsprechend kann ein geometrisch gestalteter kreisrunder Querschnitt des Arbeitsabschnitts 12 verbaut werden.

Somit lässt sich ein Bausatz gestaltet, bei dem ein einziges Schneidelement 20 für verschiedene Zinkenkörper 10 Verwendung finden kann.

Die Figuren 6 und 7 zeigen eine Variante, bei der die vier Anlageabschnitte 31.1 und 32.1 auf einem gemeinsamen Teilkreis liegen. Entsprechend kann ein kreisförmiger Querschnitt für den Arbeitsabschnitt 12 des Zinkenkörpers 10 gewählt werden. Dieser liegt dann gleichzeitig auf allen Anlageabschnitten 31.1, 32.1 auf. Dies ist in Figur 7 mit dem dick ausgezogen Zinkenkörper 10 dargestellt. Der Arbeitsabschnitt 12 bildet an seinem vorderseitigen Bereich eine Anlagefläche 13. Auf diese Anlagefläche 13 ist das Schneidelement 20 aufgesetzt. Dabei ergeben sich an der Ausnehmung 33 und den beiden Mulden 32 Spaltbereiche. Diese Spaltbereiche sind mit einer stoffschlüssigen Verbindung, beispielsweise einer Lotverbindung oder einer Klebeverbindung ausgefüllt. Auf diese Weise wird das Schneidelement 20 mit dem Zinkenkörper 10 verbunden. Entsprechend bilden die Ausnehmung 33 und die Mulden 32 Abstandsbereiche 42.1 und 42.2, die zumindest bereichsweise mit der stoffschlüssigen Verbindung ausgefüllt sind.

Im Abstandsbereich zwischen den Flanken 31 und der Anlagefläche 13 können ebenfalls Abstandsbereiche 42.3 gebildet sein. Diese lassen sich ebenfalls mit einer stoffschlüssigen Verbindung, insbesondere einer Lotverbindung ausfüllen.

Wird nun ein Arbeitsabschnitt 12 mit kleinerem Durchmesser gewählt, so liegt dieser auf den beiden zweiten Anlageabschnitten 32.1 auf. Dies ist in Figur 7 mit dem gestrichelt gezeigten Zinkenkörper 10 mit dem kleinsten Querschnitt dargestellt. Der erste Abstandsbereich 42.1 im Bereich der Ausnehmung 33 kann wieder mit der stoffschlüssigen Verbindung gefüllt werden. Die sich an die zweiten Anlageabschnitte 32.1 anschließenden Bereiche der Anlagefläche 13 ist nun nicht mehr den ersten Anlageabschnitten 31.1 zugeordnet, sondern stehen zu diesen im größeren Abstand.

Entsprechend entsteht ein größerer Spaltbereich, der wieder mit Lotmaterial oder Klebematerial gefüllt sein kann.

Wird ein Arbeitsabschnitt 12 mit größerem Durchmesser gewählt, so liegt dieser auf den beiden ersten Anlageabschnitten 31.1 auf. Dies ist in Figur 7 mit dem Zinkenkörper 10 mit dem größten Querschnitt dargestellt. Die beiden zweiten Anlageabschnitte 32.1 hingegen sind nun nicht mehr belegt. Es ergibt sich zwischen den beiden zweiten Anlageabschnitten 32.1 in der Aufnahme 30 ein bogenförmiger Spaltbereich, der mit dem Verbindungsmaterials ausgefüllt werden kann.

Die Figuren 3 und 4 lassen erkennen, dass das Schneidelement 20 einen Anschlag 28.1 aufweist. Mit dem Anschlag 28.1 liegt das Schneidelement 20 auf der Endfläche 11 des Zinkenkörpers 10 an. Auf diese Weise kann das Schneidelement 20 in Richtung seiner Längsachse X auf dem Arbeitsabschnitt 12 exakt positioniert werden.

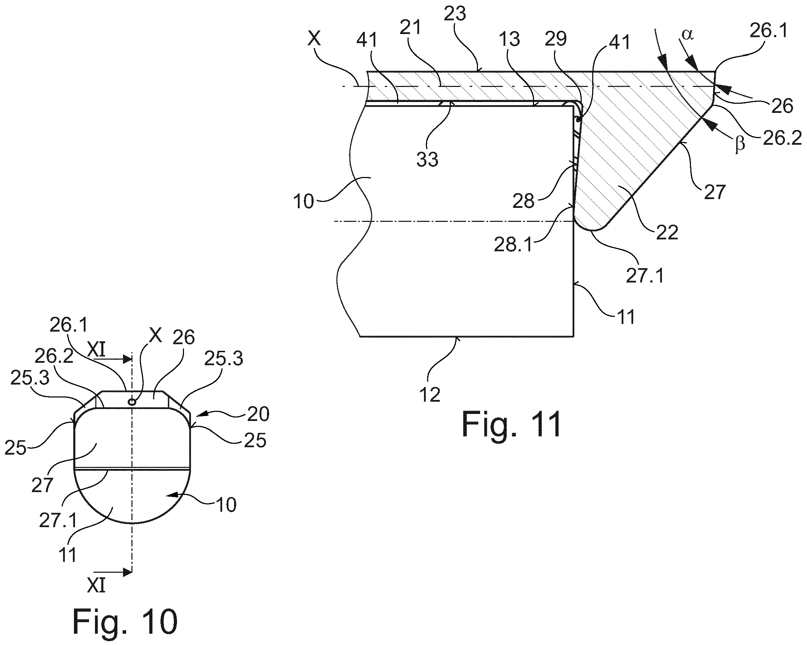

Im vorliegenden Ausführungsbeispiel wird der Anschlag 28.1 von einer Befestigungsfläche 28 des Ansatzes 22 gebildet. Wie Figur 11 erkennen lässt, ist zwischen der Anlagefläche 28 und der Endfläche 11 ein spitzer Winkel eingeschlossen. Auf diese Weise ergibt sich zwischen der Befestigungsfläche 28 und der Endfläche 11 ein Spaltbereich, der mit einer stoffschlüssigen Verbindung 41, vorzugsweise einer Lotverbindung oder einer Klebeverbindung, gefüllt sein kann. Auf diese Weise wird der Ansatz 22 unter Vermittlung der stoffschlüssigen Verbindung 41 gegenüber der Endfläche 11 abgestützt. Somit können Bearbeitungskräfte, die auf den Ansatz 22 einwirken, über den Ansatz 22 in die stoffschlüssige Verbindung 41 und von dieser in die Endfläche 11 übertragen werden.

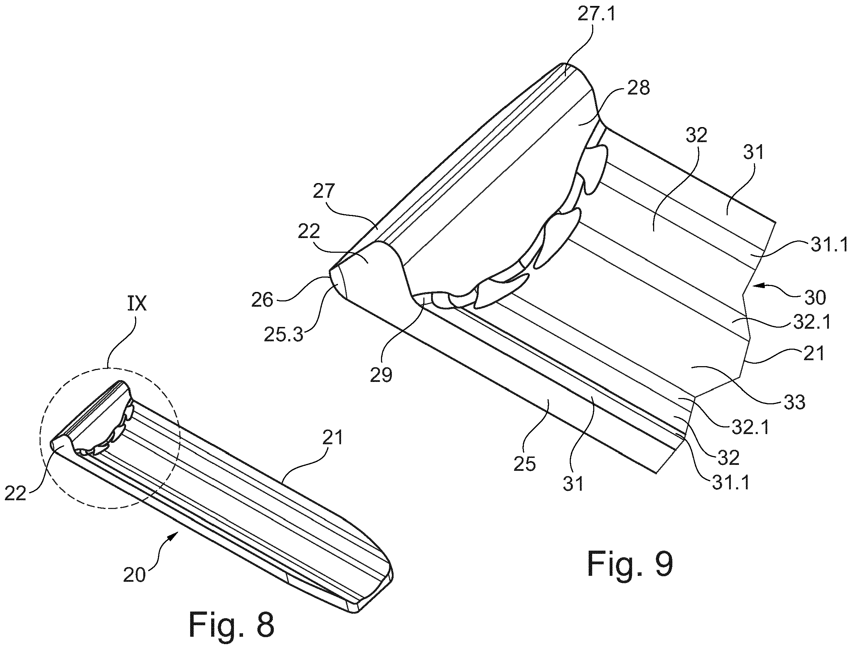

Wie die Figuren 8 und 9 weiter erkennen lassen, weist der Ansatz 22 im Übergangsbereich zwischen der Befestigungsfläche 28 und der Flächengeometrie, die die Aufnahme 30 begrenzt, eine Freimachung auf. Diese Freimachung ist im vorliegenden Ausführungsbeispiel als Nut in Form eines Übergangsbereichs 29 ausgebildet.

Figur 11 zeigt, dass der Übergangsbereich 29 so gestaltet ist, dass der Übergang, welcher sich am Zinkenkörper 10 zwischen der Endfläche 11 und der Anlagefläche 13 ausbildet, derart freigestellt ist, dass sich ein Spaltbereich bildet. Dementsprechend ragt ein etwaig in diesem Kantenbereich am Zinkenkörper 10 stehender Grat in diesen Spaltbereich. Entsprechend liegt ein solcher Grat nicht an dem Schneidelement 20 an und behindert damit nicht dessen bestimmungsgemäße Anlage (Anschlag 28.1 an der Endfläche 11 bzw. Anlage der Anlageabschnitte 31.1, 32.1 an der Anlagefläche 13).

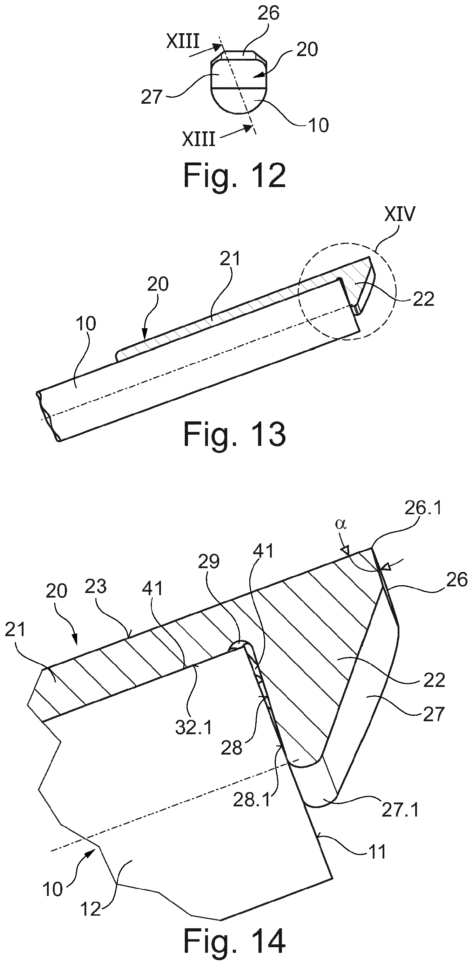

In den Figuren 12 bis 14 ist veranschaulicht, dass der Ansatz 22 eine Stirnfläche 26 aufweist. Diese Stirnfläche 26 bildet den Abschluss des Ansatzes 22 in Richtung der Längsachse des Schneidelements 20. Zwischen der Schneidfläche 23 und der Stirnfläche 26 ist ein Winkel α eingeschlossen, der vorzugsweise kleiner oder gleich 90° ist. Zwischen der Schneidfläche 23 und der Stirnfläche 26 ist eine Schneide 26.1 gebildet. Im vorliegenden Ausführungsbeispiel ist die Schneide 26.1 als Kante ausgebildet. Denkbar ist auch, dass hier eine verrundete Geometrie als Schneide 26.1 verwendet ist.

An die Stirnfläche 26 kann sich mittelbar oder unmittelbar eine Freifläche 27 anschließen. Im vorliegenden Ausführungsbeispiel schließt die Stirnfläche 26 über eine Kante 26.2 an die Freifläche 27 an. Denkbar ist es auch, dass sich die Stirnfläche 26 über eine Verrundung an die Freifläche 27 anschließt. Die Freifläche 27 schließt mit der Schneidfläche 23 einen Winkel β ein, der vorzugsweise kleiner 70°, besonders bevorzugt kleiner 60° ist.

Zwischen der Freifläche 27 und der Befestigungsfläche 28 kann spannungsoptimiert eine Verrundung 27.1 vorgesehen sein.

Die Zeichnungen gemäß den Figuren 1 bis 14 zeigen weiterhin, dass im Übergangsbereich zwischen der Stirnfläche 26 und den Seitenflächen 25 Anpassabschnitte 25.3 vorgesehen sein können. Diese Anpassabschnitte 25.3 sind als konvexe Wölbungen ausgebildet. Die Anpassabschnitte 25.3 können auch in die Freifläche 27 und die Ableitflächen 24 übergeleitet sein, beispielsweise durch Verrundungen oder scharfkantige Übergänge. Durch die Anpassabschnitte 25.3 wird eine seitliche Verrundung der Schneidkante 26.1 gebildet, die die Gefahr eines Schneidenbruches verringert.

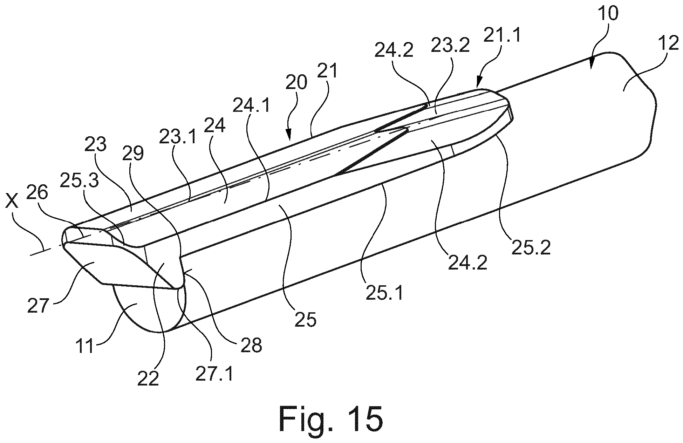

In den Figuren 15 bis 17 ist eine weitere Ausgestaltungsvariante der Erfindung dargestellt. Der Zinkenkörper 10 kann im Wesentlichen so gestaltet sein, wie dies in Bezug auf das oben beschriebene erste Ausführungsbeispiel verdeutlicht wurde. Zur Vermeidung von Wiederholungen kann dementsprechend auf die vorstehenden Ausführungen Bezug genommen werden.

Das Schneidelement 20 ist im Wesentlichen so gestaltet, wie dies in Bezug auf das erste Ausführungsbeispiel oben beschrieben wurde. Auch hier kann zur Vermeidung von Wiederholungen auf die vorstehenden Ausführungen Bezug genommen werden.

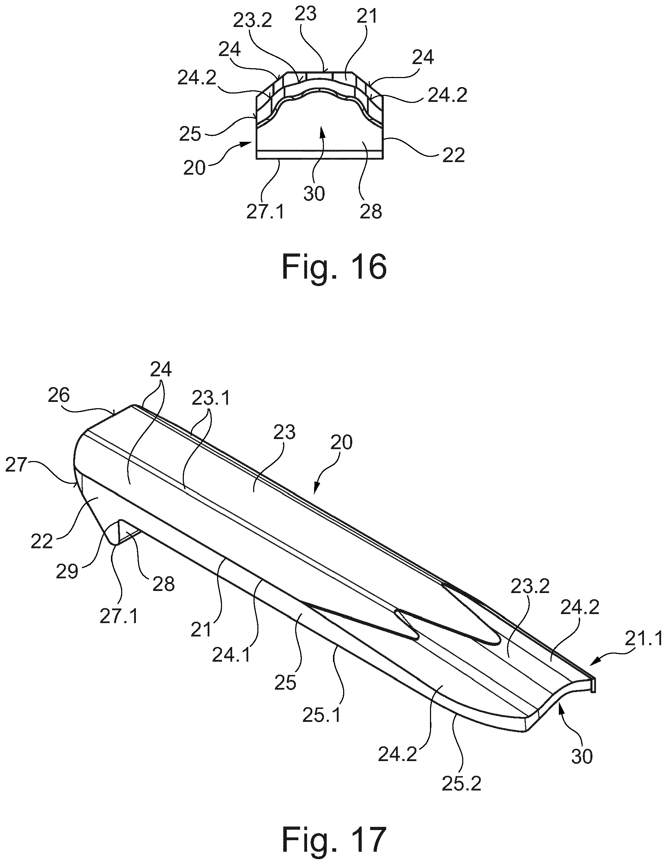

Nachstehend werden daher lediglich die Unterschiede zu dem ersten Ausführungsbeispiel erläutert. Wie die Figuren 15 und 17 zeigen, schließt sich an die Schneidfläche 23 gegenüberliegend dem Ansatz 22 eine Fase 23.2 an. Weiterhin schließen sich auch an die beiden Ableitflächen 24 Fasen 24.2 an. Mittels der Fasen 23.2 und 24.2 wird der Querschnitt des Schneidelementes 20 im Bereich seines freien Endes verjüngt.

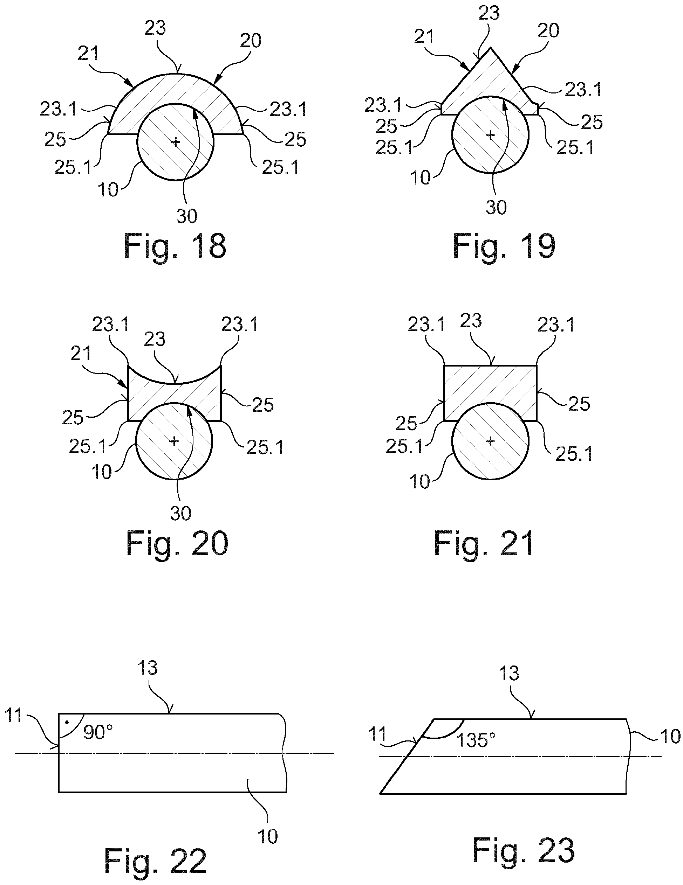

In den Figuren 18 bis 21 sind verschiedene Varianten eines Striegelzinkens gemäß der Erfindung im Querschnitt gezeigt. In den gewählten Darstellungen ist der Bereich des Ansatzes 22 nicht zu erkennen. Die oben erläuterten Details und insbesondere die in den Ansprüchen beschriebenen Details zu dem Ansatz 22 können auch bei diesen Striegelzinken-Varianten verwirklicht sein. Insbesondere können entsprechend den obigen Darstellungen an den Striegelzinken-Varianten gemäß den Figuren 18 bis 21 am Ansatz 22 Schneiden 26.1 und oder Stirnflächen 26 vorgesehen sein. Weiterhin können Freiflächen 27 gemäß den obigen Darstellungen vorgesehen sein. Schließlich ist es auch möglich, dass der Ansatz 22 eine Befestigungsfläche 28 und gegebenenfalls einen Anschlag 28.1 aufweist.

Die in den Figuren 18 bis 21 gezeigten Schneidelemente 20 sind schematisch dargestellt. Diese Schneideelemente 20 sind so illustriert, dass die Aufnahme 30 nicht näher detailliert ist. Die Aufnahme 30 kann, wie oben zu den vorstehenden Ausführungsbeispielen erläutert, ausgestaltet sein. Insbesondere kann die Aufnahme 30 auch so gestaltet sein, wie sie in den Ansprüchen angegeben ist.

In Figur 18 ist gezeigt, dass bei einer Variante des Striegelzinkens das Schneidelement 20 im Bereich des Schenkels 21 mit einer konvexen Schneidfläche 23 versehen sein kann. Die Schneidfläche 23 kann auch über die Übergangsabschnitte 23.1 in Seitenflächen 25 übergehen.

Figur 19 zeigt eine Ausgestaltungsvariante eines Schneidelements 20, bei dem die Schneidfläche 23 dachförmig ausgebildet ist. Sie weist dabei mindestens zwei zueinander im Winkel angestellte Teilflächen auf. Im Bereich, in dem die Teilflächen aufeinander treffen, kann eine scharfkantige Schneide oder eine Verrundung vorgesehen sein. Die Teilflächen können bedarfsweise jeweils über einen Übergangsabschnitt 23.1 in eine Seitenfläche 25 übergehen.

Figur 20 zeigt eine Ausgestaltung eines Schneidelements 20, bei dem eine konkave Schneidfläche 23 verwendet ist. Dabei kann es beispielsweise vorgesehen sein, dass die Schneidfläche 23 über Übergangsabschnitte 23.1 in Seitenflächen 25 übergeht.

Figur 21 gibt eine Variante zu erkennen, bei der eine ebene Schneidfläche 23 verwendet ist, die über Übergangsabschnitte 23.1 in Seitenflächen 25 übergeleitet ist. Die ebene Schneidfläche 23 kann beispielsweise in ihrer Längserstreckung parallel zur Längsachse des Zinkenkörpers 10 verlaufen.

Die vorgeschriebenen Querschnittsformen können sich über die gesamte Länge des Schenkels 21 oder nur über einen Teilbereich erstrecken.

In den Figuren 22 und 23 ist veranschaulicht, dass der Zinkenkörper 10 des Striegelzinkens eine Stirnfläche 11 aufweist, die im Winkel von 90° zur Anlagefläche 13 steht. Dabei ist die Erfindung nicht auf einen solchen Winkel begrenzt. Insbesondere kann es auch vorgesehen sein, dass die Stirnfläche 11 im Winkel größer 90° zu der Anlagefläche 13 steht. Vorzugsweise ist ein Winkel zwischen 90 und 135° verwirklicht. Je größer der Winkel gewählt ist, desto mehr Hartstoffmaterial des Schneidelements 20 kann im Bereich des Ansatzes 23 an der Stirnfläche 11 angeordnet sein. Hierdurch steht mehr Verschleißvolumen zugunsten einer verlängerten Standzeit zur Verfügung. Zudem wird mit größer werdendem Winkel auch eine Vergrößerung der Anlagefläche für das Schneidelement 20 im Bereich der Stirnfläche 11 geboten, sodass größere Kräfte abgeleitet werden können. Weiterhin entsteht durch die schräg gestellte Stirnfläche 11 eine Art Formschluss bei einer betrieblichen Belastung des Schneidelements 20 (in der Bildebene gemäß den Figuren 22 und 23 von oben nach unten).

Besonders bevorzugt ist der Zinkenkörper 10 von einem Drahtmaterial mit Rund-Querschnitt gebildet.

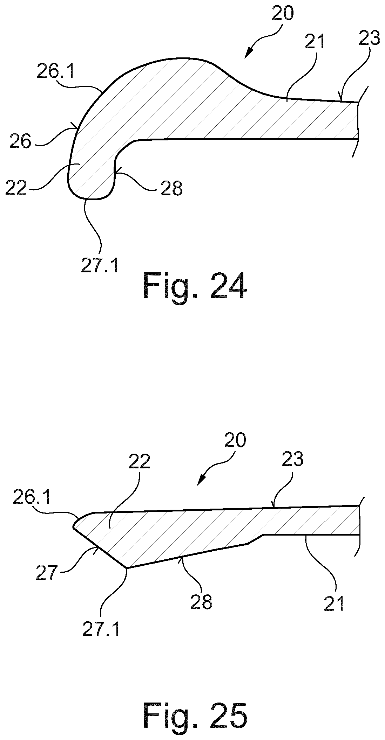

In den Figuren 24 und 25 sind verschiedene Varianten von Schneidelementen 20 im Längsschnitt gezeigt. Wie diese Darstellungen veranschaulichen, kann die Schneidfläche 23 zumindest im Bereich des Ansatzes 22 mit einer Verdickung, insbesondere einer konvexen Erhebung versehen sein. Diese Verdickung steht quer zur Längserstreckung des Schenkels 21 vor. Die Verdickung kann auch über eine Schneide 26.1 in eine Stirnfläche 26 übergehen. Weiterhin ist es denkbar, dass an die Stirnfläche 26 eine Verrundung 27.1 angeschlossen ist. Auch die Verwirklichung einer Freifläche 27 ist hier denkbar. Im Bereich des Ansatzes 22 kann wieder eine Befestigungsfläche 28 und bedarfsweise auch ein Anschlag 28.1 verwendet sein.

Figur 25 zeigt eine Variante, bei der verdeutlicht ist, dass der Ansatz 22 nichtwinkelförmig ausgestaltet sein muss. Vielmehr ist auch ein Ansatz 22 denkbar, der im Querschnitt eine Dreiecksform aufweist. Weiterhin ist es denkbar, dass bei einer möglichen Querschnittsform die Freifläche 27 und/oder die Befestigungsfläche 28 als gewölbte, beispielsweise konvexe oder konkave Geometrien ausgestaltet sind, die mittelbar oder unmittelbar ineinander übergehen.

Vorstehend wurde erläutert, dass der Schenkel 21 des Schneidelements 20 in dem, an die Anlagefläche 13 anschließenden Bereich unterschiedlichste Geometrien aufweisen kann, um ihn optimal auf die jeweilige Arbeitsaufgabe anzupassen.

Unter Bezugnahme auf die Figuren 24 bis 38 wird nachstehend erläutert, dass auch der Schenkel 21 im Bereich des Ansatzes 22 optimiert gestaltet sein kann, um ihn auf die jeweilige Arbeitsaufgabe anzupassen. Es ist unmittelbar einsichtig, dass die Ausführungsbeispiele miteinander kombiniert werden können. Dementsprechend lässt sich ein Schneidelement 20 gestalten, dessen Schenkel 21, wie vorstehend erläutert ausgebildet und der im Bereich des Ansatzes 22 wie nachstehend erläutert gestaltet ist.

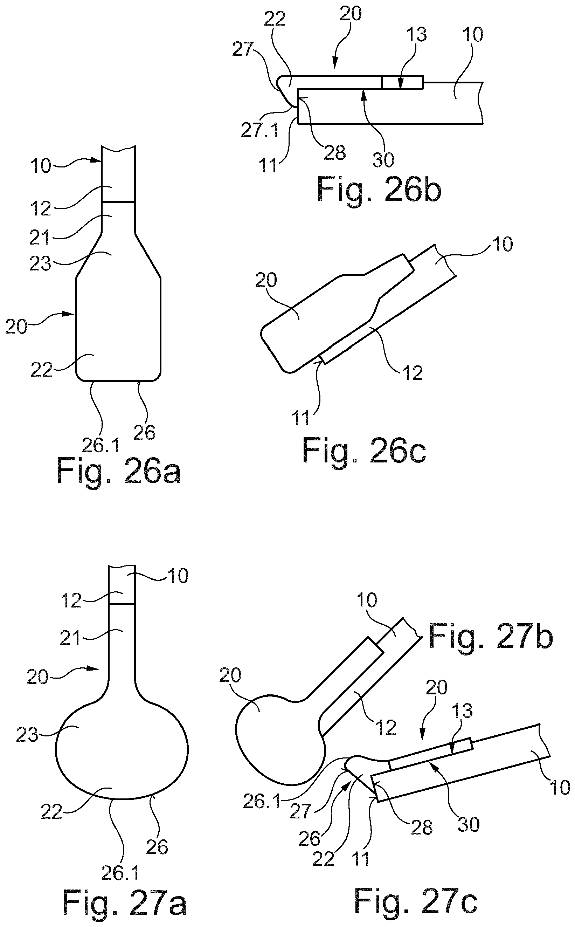

In den Figuren 26a bis 26c ist ein Striegelzinken gezeigt, der an seiner Anlagefläche 13 das Schneidelement 20 trägt. Das Schneidelement 20 ist spatenförmig ausgebildet. Dementsprechend weist der Schenkel 21 eine in Breitenrichtung verbreiterte Geometrie auf. Der den Ansatz 22 tragende Teil des Schenkels 21 ist dabei breiter ausgebildet, als der Arbeitsabschnitt 12. An seinem freien Ende bildet der Schenkel 21 eine geradlinige Schneide 26. Der geradlinige Schneidenteil geht über gerundete Schneidenteile in die Seitenflächen des Schneidelements 20 über, die sich in Figur 26a in Tiefenrichtung erstrecken.

Im Anschluss an die Schneide 26.1 bildet das Schneidelement 20 zunächst eine gleichförmige Breite. Diese Breite reduziert sich über einen Übergangsabschnitt bis hin zu einem Bereich des Schenkels 21, der die gleiche oder in etwa die gleiche Breite aufweist, wie der Arbeitsabschnitt 12 des Zinkenkörpers 10.

Die Figuren 27a bis 27c zeigen eine Variante eines Schneidelements 20, die ähnlich gestaltet ist wie die nach Figuren 26a bis 26c. Im Unterschied zu der Variante nach Figuren 26a bis 26c ist hier eine schaufelförmige Gestalt des Schneidelements 20 vorgesehen. Wie Figur 27a zeigt, weist der Schenkel 21 des Schneidelements 20 in dem an die Anlagefläche 13 des Zinkenkörpers 10 anschließenden Bereich die gleiche oder annähernd die gleiche Breite auf, wie der Arbeitsabschnitt 12 des Zinkenkörpers 10. In dem den Ansatz 22 tragenden Bereich verbreitert sich der Schenkel 21. Der Schenkel 21 bildet an seinem freien Ende eine gerundete Schneidkante 26.1.

Wie Figur 27c zeigt, kann der Schenkel 21 des Schneidelements 20 zumindest im Übergangsbereich zu der Schneidkante 26.1 zur Vorderseite hin aufgewölbt sein. Dies kann beispielsweise mit einer konkaven Geometrie verwirklicht werden. Diese konkave Geometrie kann in die konvex gewölbte Schneidkante 26.1 mittelbar oder unmittelbar übergehen, wie Figur 27c deutlich zeigt.

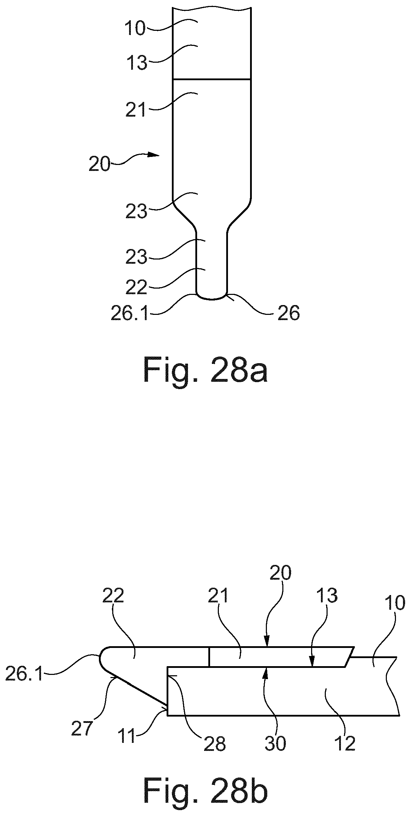

In dem Ausführungsbeispiel gemäß den Figuren 28a und 28b ist ein Schneidelement 20 gezeigt, welches zumindest in dem an die Endfläche 11 des Zinkenkörpers 10 anschließenden Bereich eine geringere Breite in Breitenrichtung aufweist als die Breite des Arbeitsabschnitts 12. Insbesondere lässt sich dadurch eine fingerförmige Geometrie gestalten. Mit einer solchen Geometrie kann bei geringer Bodenbewegung ein tiefer Bodeneingriff verwirklicht werden. Hierdurch kann eine Lockerung des Bodens zugunsten einer besseren Durchlüftung erreicht werden. Zudem lässt sich dadurch eine Nährstoffanregung bewirken.

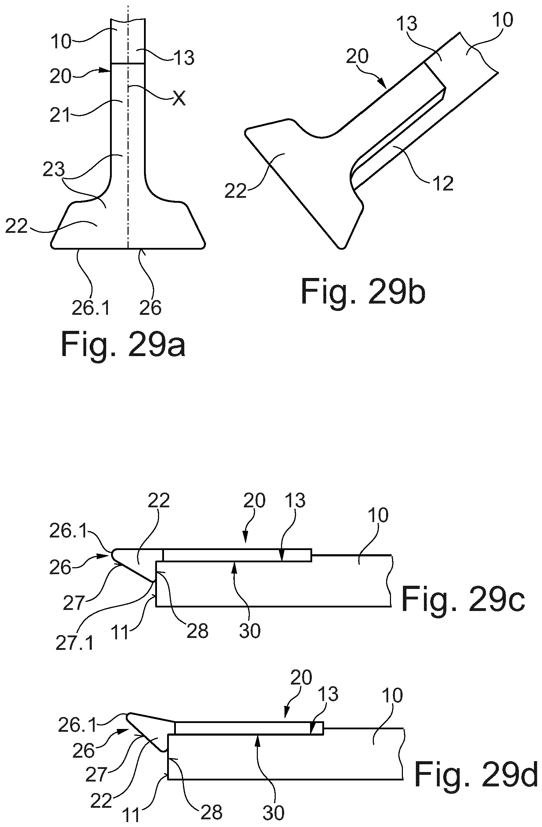

In den Figuren 29a bis 29d ist wieder ein Schneidelement 20, insbesondere für einen Striegelzinken gezeigt, welches der Ausführungsvariante gemäß den Figuren 26a bis 26c ähnelt. Auch hier ist eine spatenförmige Geometrie des Schneidelements 20 verwirklicht. Bei dem Ausführungsbeispiel gemäß den Figuren 29a bis 29d ist jedoch die Erstreckung des verbreiterten Bereichs des Ansatzes 22 in Längsrichtung X des Schneidelements 20 deutlich kürzer gewählt als bei den Figuren 26a bis 26c. Hierdurch ergibt sich eine schneidfreudige Geometrie, bei der weniger Bodenbewegung bewirkt wird als bei dem Ausführungsbeispiel nach den Figuren 26a bis 26c.

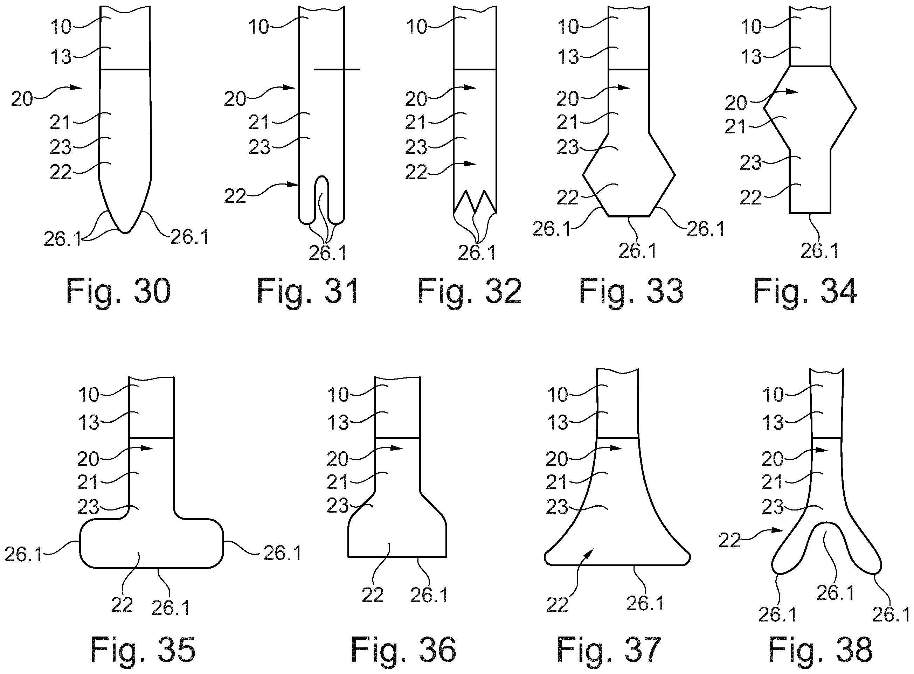

Unter Bezugnahme auf die Figuren 30 bis 38 werden nachstehend verschiedene Geometrien von Schneiden 26.1 erläutert. Die Figuren 30 bis 38 zeigen jeweils eine Aufsicht auf ein Schneidelement 20 auf die Vorderseite.

Wie Figur 30 veranschaulicht, kann der Schenkel 21 im Bereich seines freien Endes so ausgebildet sein, dass er sich kontinuierlich verjüngt. Hierdurch ergibt sich eine entsprechend V-förmig gestaltete Schneide 26.1.

Figur 31 zeigt, dass die Schneide 26.1 auch wellenförmig gestaltet werden kann.

Figur 32 veranschaulicht, dass eine zackenförmige Geometrie der Schneide 26.1 verwirklicht sein kann.

Aus Figur 33 ist ersichtlich, dass das Schneidelement 20 im Bereich seines freien Endes rautenförmig gestaltet sein kann. Dabei kann sich insbesondere eine geradlinige Schneide 26.1 ergeben, die anschließend in im Winkel zueinander stehende Schneidenteile übergeht. Dabei ist die Zuordnung so getroffen, dass sich eine verbreiterte Geometrie für das Schneidelement 20 ausgehend von dem freien Ende ergibt.

Figur 34 zeigt, dass auch im Bereich des Teils des Schenkels 21, der nicht den Ansatz 22 trägt, sondern der sich an die Anlagefläche 13 mittelbar oder unmittelbar anschließt ein verbreiteter Bereich gebildet sein kann. Der verbreiterte Bereich ist dabei so ausgestaltet, dass die Breite des Schenkels 21 hier größer ist als die Breite des Arbeitsabschnitts 12 des Zinkenkörpers 10.

In Figur 35 ist noch einmal die in den Figuren 29a und 29b gezeigte Variante eines Schneidelements 20 gezeigt, wobei jedoch eine leicht abgeänderte Geometrie in Aufsicht verwendet ist. Während bei der Ausgestaltung gemäß den Figuren 29a und 29b eine trapezförmige Gestalt des verdickten Bereichs des Schneidelements 20 gewählt ist, ist bei Figur 35 eine blockförmige Gestaltung gewählt. Dabei schließen sich an die geradlinige Schneidkante 26 senkrechte Schneidenteile an, wie dies Figur 35 zeigt.

Figur 36 zeigt eine Variante eines spatenförmigen Schneidelements 20, das ähnlich gestaltet ist wie das gemäß Figur 35. Hier ist es doch so, dass sich der verbreiterte Bereich des Schneidelements 20 in Aufsicht auf die Vorderseite kontinuierlich und linear verjüngt.

In Figur 37 ist eine spatenförmige Geometrie des Schneidelements 20 gezeigt, bei dem sich der verbreiterte Bereich kontinuierlich über eine konkave Geometrie verjüngt.

Figur 38 zeigt wieder eine wellenförmige Geometrie für ein Schneidelement 20 mit kontinuierlich ineinander übergehenden Bereichen der Schneide 26.1.

## Patentansprüche

1. Landwirtschaftliches Bodenbearbeitungswerkzeug, insbesondere Kreiseleggen-Zinken oder Striegelzinken, für eine landwirtschaftliche Bodenbearbeitungsmaschine mit einem Zinkenkörper (10), der einen Befestigungsabschnitt zur maschinenseitigen Befestigung und einen Arbeitsabschnitt (12) aufweist,
wobei der Arbeitsabschnitt (12) an seinem, dem Befestigungsabschnitt abgewandten freien Ende eine Endfläche (11) und an dem, an die Endfläche (11) mittelbar oder unmittelbar angrenzenden Arbeitsabschnitt (12) eine Anlagefläche (13) aufweist, wobei an der Anlagefläche (13) des Arbeitsabschnitts (12) wenigstens ein Schneidelement (20), bestehend aus Hartstoff, insbesondere Hartmetall oder Keramikmaterial, befestigt ist, wobei das Schneidelement (20) mit einem Schenkel (21) vorderseitig an der Anlagefläche (13) stoffschlüssig befestigt ist, wobei an dem Schenkel (21) einteilig ein Ansatz (22) rückseitig angeformt ist, der die Endfläche (11) des Zinkenkörpers (10) zumindest bereichsweise übergreift und wobei dass zwischen dem Schenkel (21) und dem Ansatz (22) ein Übergangsbereich (29) gebildet ist, der den Übergang zwischen der Anlagefläche (13) und der Endfläche (11) zumindest bereichsweise überdeckt, **dadurch gekennzeichnet dass** die Anlagefläche (13) des Arbeitsabschnitts (12) des Zinkenkörpers (10) konvex ausgebildet ist, und dass das Schneidelement (20) an seinem Schenkel (21) eine eingetiefte Aufnahme (30) aufweist, die sich in Richtung der Längsachse (X) des Schneidelements (20) erstreckt und in die die konvexe Anlagefläche (13) zumindest bereichsweise hineinragt.

2. Landwirtschaftliches Bodenbearbeitungswerkzeug nach Anspruch 1, **dadurch gekennzeichnet, dass** der Arbeitsabschnitt (12) des Zinkenkörpers (10) von einem Drahtabschnitt gebildet ist, der vorzugsweise einteilig in den Befestigungsabschnitt mittelbar oder unmittelbar übergeht.

3. Landwirtschaftliches Bodenbearbeitungswerkzeug nach einem der Ansprüche 1 oder 2, **dadurch gekennzeichnet, dass** der Schenkel (21) des Schneidelements (20) wenigstens zwei Anlageabschnitte (31.1, 32.1) aufweist, die vorzugsweise innerhalb der eingetieften Aufnahme (30) angeordnet sind und die weiter vorzugsweise dazu ausgebildet sind unterschiedliche Querschnitte von Arbeitsabschnitten (12), insbesondere kreisförmige Querschnitte, aufzunehmen.

4. Landwirtschaftliches Bodenbearbeitungswerkzeug nach einem der Ansprüche 1 bis 3, **dadurch gekennzeichnet, dass** in der Aufnahme (30) oder in einem Bereich außerhalb der Aufnahme (30) zwei zueinander beabstandete erste Anlageabschnitte (31.1) angeordnet sind, die auf einem ersten Teilkreis angeordnet sind, und dass in der Aufnahme (30) oder in einem Bereich außerhalb der Aufnahme (30) zwei zueinander beabstandete zweite Anlageabschnitte (32.1) angeordnet sind, die auf einem zweiten Teilkreis angeordnet sind, wobei diese beiden Teilkreise einen unterschiedlichen Durchmesser aufweisen.

5. Landwirtschaftliches Bodenbearbeitungswerkzeug nach einem der Ansprüche 1 bis 4, **dadurch gekennzeichnet, dass** die Aufnahme (30) eine Ausnehmung (33) aufweist, an die sich beidseitig die zweiten Anlageabschnitte (32.1) anschließen, dass zwischen den ersten und den zweiten Anlageabschnitten (31.1, 32.1) jeweils eine Mulde (32) ausgebildet ist, und dass die Ausnehmung (33) und die Mulden (32) mit Stoffschlussmaterial, insbesondere mit Lotmaterial oder einem Klebematerial zumindest teilweise gefüllt sind.

6. Landwirtschaftliches Bodenbearbeitungswerkzeug nach einem der vorhergehenden Ansprüche, **dadurch gekennzeichnet, dass** die ersten und zweiten Anlageabschnitte (31.1, 32.1) als konvexe Erhebungen ausgebildet sind, die sich als rippenförmige Erhebungen in der Aufnahme (30) in Richtung der Längsachse (X) des Schneidelements (20) erstrecken.

7. Landwirtschaftliches Bodenbearbeitungswerkzeug nach einem der Ansprüche 1 bis 6, **dadurch gekennzeichnet, dass** der Schenkel (21) des Schneidelements (20) eine Schneidekante oder eine Schneidfläche (23) aufweist, die sich in Richtung der Längsachse (X) des Schneidelements (20) erstreckt, dass das an dem Ansatz (22) eine Stirnfläche (26) vorgesehen ist, die im Winkel zu der Endfläche (11) zur Bildung einer Freifläche (27) oder parallel zu dieser steht, und dass zwischen der Stirnfläche (26) und der Schneidkante oder Schneidfläche (23) ein Übergangsabschnitt geformt ist, der vorzugsweise eine Schneide (26.1) bildet.

8. Landwirtschaftliches Bodenbearbeitungswerkzeug nach einem der Ansprüche 1 bis 7, **dadurch gekennzeichnet, dass**
der Ansatz (22) eine rückwärtige Freifläche (27) aufweist, die mit der Längsachse (X) des Schneidelements (20) einen spitzen Winkel einschließt und entgegengesetzt zu der frontseitigen Schneidfläche (23) oder Schneidkante des Schenkels (21) steht.

9. Landwirtschaftliches Bodenbearbeitungswerkzeug nach einem der Ansprüche 1 bis 8, **dadurch gekennzeichnet, dass** der Ansatz (22) einen Anschlag (28.1) aufweist, der an der Endfläche (11) des Zinkenkörpers (10) anschlägt.

10. Landwirtschaftliches Bodenbearbeitungswerkzeug nach einem der Ansprüche 1 bis 9, **dadurch gekennzeichnet, dass** der Ansatz (22) eine Befestigungsfläche (28) aufweist, und dass zwischen der Befestigungsfläche (28) und der Endfläche (11) des Zinkenkörpers (10) eine Stoffschlussverbindung (41), insbesondere ein Lotmaterial oder eine Klebeverbindung angeordnet ist

11. Landwirtschaftliches Bodenbearbeitungswerkzeug nach einem der Ansprüche 1 bis 10, **dadurch gekennzeichnet, dass** der zwischen dem Schenkel (21) und dem Ansatz (22) gebildete Übergangsbereich (29) des Schneidelements (20) beabstandet zu dem Kantenbereich des Zinkenkörpers (10), der den Übergang zwischen der Anlagefläche (13) und der Endfläche (11) bildet, angeordnet ist, wobei vorzugsweise der Übergangsbereich (29) von einer Nut gebildet ist oder dieser eine Nut aufweist.

12. Landwirtschaftliches Bodenbearbeitungswerkzeug nach einem der Ansprüche 1 bis 11, **dadurch gekennzeichnet, dass** der Ansatz (22) in Richtung der Längsachse (X) des Schneidelements (20) zumindest 1 mm und maximal 20 mm über die Endfläche (11) des Zinkenkörpers (10) vorsteht.

13. Landwirtschaftliches Bodenbearbeitungswerkzeug nach einem der Ansprüche 1 bis 12, **dadurch gekennzeichnet, dass** die Erstreckung des Schneidelements (20) in Richtung der Längsachse (X) des Schneidelements (20) im Bereich zwischen 20 mm und 100 mm beträgt, und/oder dass die Erstreckung des Schneidelements (20) senkrecht zu der Längsachse (X) des Schneidelements (20) und in Breitenrichtung im Bereich zwischen 5 mm und 100 mm beträgt, und/oder dass die Erstreckung des Schneidelements (20) in Tiefenrichtung, die senkrecht zu der Längsachse (X) des Schneidelements (20) und von der Vorderseite zu der Rückseite verläuft, im Bereich zwischen 5 und 30 mm beträgt.

14. Landwirtschaftliches Bodenbearbeitungswerkzeug nach einem der Ansprüche 1 bis 13, **dadurch gekennzeichnet, dass** der Schenkel (21) des Schneidelements (20) eine frontseitige, in Richtung der Längsachse (X) des Schneidelements (20) verlaufende Schneidfläche (23) aufweist, dass vorzugsweise an die Schneidfläche (23) beidseitig im Winkel Ableitflächen (24) angeschlossen sind, die ebenfalls in Richtung der Längsachse (X) des Schneidelements (20) verlaufen und dass die Schneidfläche (23) und /oder die Ableitflächen (24), vorzugsweise über eine Fase, (23.2, 24.2) in Richtung zu dem dem Ansatz (22) abgewandten Ende hin auslaufen derart, dass sich die Materialdicke des Schenkels (21) in diesem Bereich verringert.

15. Landwirtschaftliches Bodenbearbeitungswerkzeug nach einem der Ansprüche 1 bis 14, **dadurch gekennzeichnet, dass** der Ansatz (22) stoffschlüssig mit der Endfläche (11) verbunden ist.

16. Landwirtschaftliches Bodenbearbeitungswerkzeug nach einem der Ansprüche 1 bis 15, **dadurch gekennzeichnet, dass** der Schenkel (21) an seinem, den Ansatz (22) tragenden und über die Endfläche (11) des Zinkenkörpers (10) vorstehenden Endabschnitt, zumindest bereichsweise eine sich in Breitenrichtung verlaufende Breite aufweist, die gleich oder größer ist als die Breite des Arbeitsabschnitts (12) des Zinkenkörpers (10) in diese Richtung,
oder dass der Schenkel (21) an seinem, den Ansatz (22) tragenden und über die Endfläche (11) des Zinkenkörpers (10) vorstehenden Endabschnitt, zumindest bereichsweise eine sich in Breitenrichtung verlaufende Breite aufweist, die kleiner ist als die Breite des Arbeitsabschnitts (12) des Zinkenkörpers (10) in diese Richtung.

17. Landwirtschaftliches Bodenbearbeitungswerkzeug nach einem der Ansprüche 1 bis 16, **dadurch gekennzeichnet, dass** der Schenkel (21) an seinem, an die Anlagefläche (13) anschließenden und nicht über die Endfläche (11) des Zinkenkörpers (10) vorstehenden Bereich, zumindest bereichsweise eine sich in Breitenrichtung verlaufende Breite aufweist, die gleich oder größer ist als die Breite des Arbeitsabschnitts (12) des Zinkenkörpers (10) in diese Richtung,
oder dass der Schenkel (21) an seinem, an die Anlagefläche (13) anschließenden und nicht über die Endfläche (11) des Zinkenkörpers (10) vorstehenden Bereich, zumindest bereichsweise eine sich in Breitenrichtung verlaufende Breite aufweist, die kleiner ist als die Breite des Arbeitsabschnitts (12) des Zinkenkörpers (10) in diese Richtung.

18. Landwirtschaftliches Bodenbearbeitungswerkzeug nach einem der Ansprüche 1 bis 17, **dadurch gekennzeichnet, dass** der Schenkel (21) an seinem, den Ansatz (22) tragenden und über die Endfläche (11) des Zinkenkörpers (10) vorstehenden Endabschnitt, zumindest bereichsweise eine schaufel- oder spatenförmige Geometrie in Aufsicht auf die Vorderseite aufweist.

19. Landwirtschaftliches Bodenbearbeitungswerkzeug nach einem der Ansprüche 1 bis 18, **dadurch gekennzeichnet, dass** der Schenkel (21) an seinem, den Ansatz (22) tragenden und über die Endfläche (11) des Zinkenkörpers (10) vorstehenden Endabschnitt, zumindest bereichsweise eine Schneide (26.1) bildet, die in Aufsicht auf die Vorderseite eine gerundete, eine wellenförmige, geradlinige und/oder zackenförmige Kontur bildet.

## Claims

1. Agricultural soil working tool, in particular rotary harrow tine or harrow tine, for an agricultural soil working machine, having a tine body (10) which has a fastening section for fastening on the machine side and a working section (12), the working section (12) having an end face (11) at its free end facing away from the fastening section and having a contact face (13) on the working section (12) which is indirectly or directly adjacent to the end face (11), at least one cutting element (20), consisting of hard material, in particular hard metal or ceramic material, being fastened to the support surface (13) of the working section (12), the cutting element (20) being fastened with a leg (21) to the front of the support surface (13) by means of a material bond, wherein a projection (22) is formed on the back of the leg (21), which projection overlaps the end face (11) of the tine body (10) at least in some areas, and wherein a transition region (29) is formed between the leg (21) and the projection (22), which transition region covers the transition between the support surface (13) and the end face (11) at least in some areas,
**characterized**
**in that** the support surface (13) of the working section (12) of the tine body (10) is convex, and in that the cutting element (20) has a recessed receptacle (30) on its leg (21), which extends in the direction of the longitudinal axis (X) of the cutting element (20) and into which the convex support surface (13) projects at least in some areas.

2. Agricultural soil working tool according to claim 1, **characterized in that** the working section (12) of the tine body (10) is formed by a wire section which preferably merges in one piece directly or indirectly into the fastening section.

3. Agricultural soil working tool according to one of claims 1 or 2, **characterized in that** the leg (21) of the cutting element (20) has at least two support sections (31.1, 32.1),
which are preferably arranged within the recessed receptacle (30) and which are further preferably designed to receive different cross-sections of working sections (12), in particular circular cross-sections.

4. Agricultural soil working tool according to one of claims 1 to 3, **characterized in that** two spaced apart first support sections (31.1) are arranged in the receptacle (30) or in a region outside the receptacle (30), which support sections are arranged on a first partial circle, and **in that** two spaced apart second support sections (32.1) are arranged in the receptacle (30) or in a region outside the receptacle (30), which support sections are arranged on a second partial circle, these two partial circles having a different diameter.

5. Agricultural soil working tool according to one of claims 1 to 4, **characterized in that** the receptacle (30) has a recess (33) which is adjoined on both sides by the second support sections (32.1), **in that** a trough (32) is formed between each of the first and second support sections (31.1, 32.1), and **in that** the recess (33) and the troughs (32) are at least partially filled with material bonding material, in particular with solder material or an adhesive material.

6. Agricultural soil working tool according to one of the preceding claims, **characterized in that** the first and second support sections (31.1, 32.1) are formed as convex elevations which extend as rib-shaped elevations in the receptacle (30) in the direction of the longitudinal axis (X) of the cutting element (20).

7. Agricultural soil working tool according to one of claims 1 to 6, **characterized in that** the leg (21) of the cutting element (20) has a cutting edge or a cutting surface (23) which extends in the direction of the longitudinal axis (X) of the cutting element (20), **in that** an end face (26) is provided on the projection (22), which is at an angle to the end face (11) to form a clearance surface (27) or parallel thereto, and **in that** a transition section is formed between the end face (26) and the cutting edge or cutting surface (23), which transition section preferably forms a cutting edge (26. 1).

8. Agricultural soil working tool according to one of claims 1 to 7, **characterized in that** the projection (22) has a rear clearance surface (27) which forms an acute angle with the longitudinal axis (X) of the cutting element (20) and is opposite to the front cutting surface (23) or cutting edge of the leg (21).

9. Agricultural soil working tool according to one of claims 1 to 8, **characterized in that** the projection (22) has a stop (28.1) which abuts against the end face (11) of the tine body (10).

10. Agricultural soil working tool according to one of claims 1 to 9, **characterized in that** the projection (22) has an attachment surface (28), and **in that** a material bonding connection (41), in particular a solder material or an adhesive connection, is arranged between the attachment surface (28) and the end face (11) of the tine body (10)

11. Agricultural soil working tool according to one of claims 1 to 10, **characterized in that** the transition region (29) of the cutting element (20) formed between the leg (21) and the projection (22) is arranged at a distance from the edge region of the tine body (10), which forms the transition between the support surface (13) and the end face (11), the transition region (29) preferably being formed by a groove or having a groove.

12. Agricultural soil working tool according to one of claims 1 to 11, **characterized in that** the projection (22) protrudes at least 1 mm and at most 20 mm beyond the end face (11) of the tine body (10) in the direction of the longitudinal axis (X) of the cutting element (20).

13. Agricultural soil working tool according to any one of claims 1 to 12, **characterized in that** the extension of the cutting element (20) in the direction of the longitudinal axis (X) of the cutting element (20) is in the range between 20 mm and 100 mm, and/or that the extension of the cutting element (20) perpendicular to the longitudinal axis (X) of the cutting element (20) and in the width direction is in the range between 5 mm and 100 mm, and/or that the extension of the cutting element (20) in the depth direction, which is perpendicular to the longitudinal axis (X) of the cutting element (20) and extends from the front side to the rear side, is in the range between 5 and 30 mm.

14. Agricultural soil working tool according to any one of claims 1 to 13, **characterized in that** the leg (21) of the cutting element (20) has a front-side cutting surface (23) extending in the direction of the longitudinal axis (X) of the cutting element (20), **in that** preferably connected to the cutting surface (23) on both sides at an angle are deflector surfaces (24) which also extend in the direction of the longitudinal axis (X) of the cutting element (20) and **in that** the cutting surface (23) and/or the deflector surfaces (24), preferably via a chamfer,(23. 2, 24.2), taper towards the end facing away from the projection (22) in such a way that the material thickness of the leg (21) is reduced in this area.

15. Agricultural soil working tool according to one of claims 1 to 14, **characterized in that** the projection (22) is connected to the end face (11) by means of a material bond.

16. Agricultural soil working tool according to one of claims 1 to 15, **characterized in that** the leg (21), at its end section carrying the projection (22) and projecting beyond the end face (11) of the tine body (10), has a width extending in the width direction, at least in some areas, which is equal to or greater than the width of the working section (12) of the tine body (10) in this direction, or **in that** the leg (21), at its end section carrying the projection (22) and projecting beyond the end face (11) of the tine body (10), has, at least in some areas, a width extending in the width direction which is smaller than the width of the working section (12) of the tine body (10) in this direction.

17. Agricultural soil working tool according to one of claims 1 to 16, **characterized in that** the leg (21) has, at its region adjoining the support surface (13) and not projecting beyond the end face (11) of the tine body (10), at least in some areas, a width extending in the width direction which is equal to or greater than the width of the working section (12) of the tine body (10) in this direction, or **in that** the leg (21), in its region adjoining the support surface (13) and not projecting beyond the end face (11) of the tine body (10), has, at least in some areas, a width extending in the width direction which is smaller than the width of the working section (12) of the tine body (10) in this direction.

18. Agricultural soil working tool according to one of claims 1 to 17, **characterized in that** the leg (21), at its end section carrying the projection (22) and projecting beyond the end face (11) of the tine body (10), has a shovel- or spade-shaped geometry, at least in some areas, as viewed from the front side.

19. Agricultural soil working tool according to one of claims 1 to 18, **characterized in that** the leg (21) forms a cutting edge (26.1) on its end section carrying the projection (22) and projecting beyond the end face (11) of the tine body (10), at least in some areas, which cutting edge forms a rounded, wavy, straight and/or serrated contour when viewed from the front side.

## Revendications

1. Outil agricole de travail du sol, en particulier dent de herse rotative ou dent de herse étrille, pour une machine agricole de travail du sol avec un corps de dent (10) qui présente une section de fixation pour la fixation côté machine et une section de travail (12), en ce que la section de travail (12) présentant à son extrémité libre opposée à la section de fixation une surface d'extrémité (11) et la section de travail (12) présentant une surface d'appui (13) directement ou indirectement adjacente à la surface d'extrémité (11), au moins un élément de coupe (20), constitué d'un matériau dur, en particulier d'un métal dur ou d'un matériau céramique, étant fixé sur la surface d'appui (13) de la section de travail (12), en ce que l'élément de coupe (20) étant fixé par une branche (21) sur le côté avant à la surface d'appui (13) par liaison de matière, un appendice (22) étant formé d'un seul tenant sur le côté arrière de la branche (21), en ce que l'appendice recouvre au moins par endroits la surface d'extrémité (11) du corps de dent (10), et une zone de transition (29) étant formée entre la branche (21) et l'appendice (22), en ce que la zone recouvre au moins par endroits la transition entre la surface d'appui (13) et la surface d'extrémité (11).
**caractérisé en ce que**
la surface d'appui (13) de la section de travail (12) du corps de dent (10) est convexe, et **en ce que** l'élément de coupe (20) présente sur sa branche (21) un logement en creux (30) qui s'étend dans la direction de l'axe longitudinal (X) de l'élément de coupe (20) et dans lequel la surface d'appui convexe (13) pénètre au moins par zones.

2. Outil agricole de travail du sol selon la revendication 1, **caractérisé en ce que** la section de travail (12) du corps de la dent (10) est formée par une section de fil qui se prolonge directement ou indirectement, de préférence d'un seul tenant, dans la section de fixation.

3. Outil agricole de travail du sol selon l'une des revendications 1 ou 2, **caractérisé en ce que** la branche (21) de l'élément de coupe (20) présente au moins deux sections d'appui (31.1, 32.1) qui sont de préférence disposées à l'intérieur du logement en creux (30) et qui sont en outre de préférence conçues pour recevoir différentes sections transversales de sections de travail (12), notamment des sections transversales circulaires.

4. Outil agricole de travail du sol selon l'une des revendications 1 à 3, **caractérisé en ce que** dans le logement (30) ou dans une zone située à l'extérieur du logement (30) sont disposées deux premières sections d'appui (31.1) espacées l'une de l'autre, qui sont disposées sur un premier cercle primitif, et **en ce que** dans le logement (30) ou dans une zone située à l'extérieur du logement (30) sont disposées deux secondes sections d'appui (32.1) espacées l'une de l'autre, qui sont disposées sur un second cercle primitif, ces deux cercles primitifs présentant un diamètre différent.

5. Outil agricole de travail du sol selon l'une des revendications 1 à 4, **caractérisé en ce que** le logement (30) présente un évidement (33) auquel se raccordent des deux côtés les deuxièmes sections d'appui (32.1), **en ce qu'**une auge (32) est formée respectivement entre les premières et les deuxièmes sections d'appui (31.1, 32.1), et **en ce que** l'évidement (33) et les auges (32) sont remplis au moins partiellement de matériau de fermeture de la matière, en particulier de matériau de brasage ou d'un matériau adhésif.

6. Outil agricole de travail du sol selon l'une des revendications précédentes, **caractérisé en ce que** les première et deuxième sections d'appui (31.1, 32.1) sont réalisées sous forme de bosses convexes qui s'étendent sous forme de bosses en forme de nervures dans le logement (30) dans la direction de l'axe longitudinal (X) de l'élément de coupe (20).

7. Outil agricole de travail du sol selon l'une des revendications 1 à 6, **caractérisé en ce que** la branche (21) de l'élément de coupe (20) présente une arête ou une surface de coupe (23) qui s'étend dans la direction de l'axe longitudinal (X) de l'élément de coupe (20), **en ce qu'**il est prévu sur l'appendice (22) une surface frontale (26) qui est inclinée par rapport à la surface d'extrémité (11) pour former une surface de dépouille (27) ou parallèle à celle-ci, et **en ce qu'**entre la surface frontale (26) et l'arête de coupe ou la surface de coupe (23) est formée une section de transition qui constitue de préférence un tranchant (26. 1) est formée.

8. Outil agricole de travail du sol selon l'une quelconque des revendications 1 à 7, **caractérisé en ce que** l'appendice (22) présente une surface de dépouille arrière (27) qui forme un angle aigu avec l'axe longitudinal (X) de l'élément de coupe (20) et qui est opposée à la surface de coupe avant (23) ou à l'arête de coupe de la branche (21).

9. Outil agricole de travail du sol selon l'une des revendications 1 à 8, **caractérisé en ce que** l'appendice (22) présente une butée (28.1) qui vient buter contre la surface d'extrémité (11) du corps de dent (10).

10. Outil agricole de travail du sol selon l'une des revendications 1 à 9, **caractérisé en ce que** l'appendice (22) présente une surface de fixation (28), et **en ce qu'**une liaison de fermeture de matière (41), en particulier un matériau de brasage ou une liaison adhésive, est disposée entre la surface de fixation (28) et la surface d'extrémité (11) du corps de dent (10).

11. Outil agricole de travail du sol selon l'une des revendications 1 à 10, **caractérisé en ce que** la zone de transition (29) de l'élément de coupe (20) formée entre la branche (21) et l'appendice (22) est disposée à distance de la zone de bord du corps de dent (10) qui forme la transition entre la surface d'appui (13) et la surface d'extrémité (11), la zone de transition (29) étant de préférence formée par une rainure ou présentant une rainure.

12. Outil agricole de travail du sol selon l'une des revendications 1 à 11, **caractérisé en ce que** l'appendice (22) fait saillie dans la direction de l'axe longitudinal (X) de l'élément de coupe (20) d'au moins 1 mm et d'au maximum 20 mm par rapport à la surface d'extrémité (11) du corps de dent (10).

13. Outil agricole de travail du sol selon l'une des revendications 1 à 12, **caractérisé en ce que** l'extension de l'élément de coupe (20) dans la direction de l'axe longitudinal (X) de l'élément de coupe (20) est comprise entre 20 mm et 100 mm, et/ou **en ce que** l'extension de l'élément de coupe (20) perpendiculairement à l'axe longitudinal (X) de l'élément de coupe (20) et dans le sens de la largeur est comprise entre 5 mm et 100 mm, et/ou **en ce que** l'extension de l'élément de coupe (20) dans le sens de la profondeur, qui est perpendiculaire à l'axe longitudinal (X) de l'élément de coupe (20) et va de l'avant vers l'arrière, est comprise entre 5 et 30 mm.

14. Outil agricole de travail du sol selon l'une des revendications 1 à 13, **caractérisé en ce que** la branche (21) de l'élément de coupe (20) présente une surface de coupe (23) frontale s'étendant selon l'axe longitudinal (X) de l'élément de coupe (20), **en ce que** des surfaces de dérivation (24), qui s'étendent également dans la direction de l'axe longitudinal (X) de l'élément de coupe (20), sont de préférence raccordées en angle à la surface de coupe (23) des deux côtés, et **en ce que** la surface de coupe (23) et/ou les surfaces de dérivation (24), de préférence par l'intermédiaire d'un chanfrein (23. 2, 24.2) se terminent en direction de l'extrémité opposée à l'appendice (22) de telle sorte que l'épaisseur de matériau de la branche (21) diminue dans cette zone.

15. Outil agricole de travail du sol selon l'une des revendications 1 à 14, **caractérisé en ce que** l'appendice (22) est relié à la surface d'extrémité (11) par une liaison de matière.

16. Outil agricole de travail du sol selon l'une des revendications 1 à 15, **caractérisé en ce que** la branche (21) présente, au niveau de sa section d'extrémité portant l'appendice (22) et dépassant de la surface d'extrémité (11) du corps de dent (10), au moins par endroits, une largeur s'étendant dans le sens de la largeur qui est égale ou supérieure à la largeur de la section de travail (12) du corps de dent (10) dans ce sens, ou **en ce que** la branche (21) présente, au niveau de sa section d'extrémité portant l'appendice (22) et dépassant de la surface d'extrémité (11) du corps de dent (10), au moins par endroits, une largeur s'étendant dans la direction de la largeur qui est inférieure à la largeur de la section de travail (12) du corps de dent (10) dans cette direction.

17. Outil agricole de travail du sol selon l'une des revendications 1 à 16, **caractérisé en ce que** la branche (21) présente, au niveau de sa zone se raccordant à la surface d'appui (13) et ne dépassant pas de la surface d'extrémité (11) du corps de dent (10), au moins par endroits, une largeur s'étendant dans le sens de la largeur qui est égale ou supérieure à la largeur de la section de travail (12) du corps de dent (10) dans ce sens, ou **en ce que** la branche (21) présente, au niveau de sa zone se raccordant à la surface d'appui (13) et ne dépassant pas de la surface d'extrémité (11) du corps de dent (10), au moins par endroits, une largeur s'étendant dans le sens de la largeur, qui est inférieure à la largeur de la section de travail (12) du corps de dent (10) dans ce sens.

18. Outil agricole de travail du sol selon l'une des revendications 1 à 17, **caractérisé en ce que** la branche (21) présente, au niveau de sa section d'extrémité portant l'appendice (22) et dépassant de la surface d'extrémité (11) du corps de dent (10), au moins par endroits une géométrie en forme de pelle ou de bêche en vue de la face avant.

19. Outil agricole de travail du sol selon l'une des revendications 1 à 18, **caractérisé en ce que** la branche (21) forme, au niveau de sa section d'extrémité portant l'appendice (22) et dépassant de la surface d'extrémité (11) du corps de dent (10), au moins par endroits, un tranchant (26.1) qui, vu de la face avant, forme un contour arrondi, ondulé, rectiligne et/ou en forme de dents.
